(19) Europäisches Patentamt
European Patent Office
Office européen des brevets

(11) **EP 4 593 469 A1**

(12) **EUROPEAN PATENT APPLICATION**
published in accordance with Art. 153(4) EPC

(43) Date of publication:
**30.07.2025 Bulletin 2025/31**

(21) Application number: **23868441.9**

(22) Date of filing: **04.09.2023**

(51) International Patent Classification (IPC):
*H04W 48/16* (2009.01)     *H04W 48/08* (2009.01)
*H04W 56/00* (2009.01)     *H04L 5/00* (2006.01)

(52) Cooperative Patent Classification (CPC):
H04L 5/00; H04W 48/08; H04W 48/16; H04W 56/00

(86) International application number:
**PCT/KR2023/013177**

(87) International publication number:
**WO 2024/063386 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.09.2022 KR 20220121076**

(71) Applicant: **LG Electronics Inc.**
**Yeongdeungpo-gu**
**Seoul 07336 (KR)**

(72) Inventors:
• **KIM, Seonwook**
  **Seoul 06772 (KR)**
• **KIM, Kijun**
  **Seoul 06772 (KR)**
• **YANG, Suckchel**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **DEVICE AND METHOD FOR TRANSMITTING AND RECEIVING CELL DISCOVERY SIGNAL IN WIRELESS COMMUNICATION SYSTEM**

(57)     The present disclosure relates to transmitting and receiving a cell discovery signal in a wireless communication system, and a method for operating a terminal may include receiving at least one synchronization signal and broadcast channel block (SSB), obtaining synchronization with a base station by using a synchronization signal included in the SSB, obtaining system information based on a master information block (MIB) included in the SSB, performing a random access procedure based on the system information, transmitting a message for requesting transmission of a discovery signal to the base station, and performing tracking for at least one of time and frequency based on the discovery signal.

FIG. 23

## Description

Technical Field

The present disclosure relates to a wireless communication system, and more particularly, to a method and apparatus for transmitting and receiving a cell discovery signal in a wireless communication system.

Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

Disclosure

Technical Problem

The present disclosure may provide an apparatus and method for effectively using a cell discovery signal in a wireless communication system.

The present disclosure may provide an apparatus and method for reducing energy consumption caused by transmission of a tracking reference signal (TRS) in a wireless communication system.

The present disclosure may provide an apparatus and method for utilizing various structures of cell discovery signals in a wireless communication system.

The present disclosure may provide an apparatus and method for using cell discovery signals with a multiplexing structure of synchronization signal and broadcast channel block (SSB) and a modified structure of SSB in a wireless communication system.

The present disclosure may provide an apparatus and method for requesting transmission of a cell discovery signal in a wireless communication system.

The present disclosure may provide an apparatus and method for providing information related to a resource occupied by a cell discovery signal in a wireless communication system.

The present disclosure may provide an apparatus and method for providing necessary information for performing rate-matching on account of a resource occupied by a cell discovery signal in a wireless communication system.

The present disclosure may provide an apparatus and method for controlling uplink transmission for a duration including a resource occupied by a cell discovery signal in a wireless communication system.

The present disclosure may provide an apparatus and method for managing random access channel occasions (ROs) or physical uplink shared channel occasions (POs) corresponding to cell discovery signals in a wireless communication system.

The present disclosure may provide an apparatus and method for providing additional configuration information by using a cell discovery signal in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

Technical Solution

As an example of the present disclosure, a method for operating a terminal in a wireless communication system may include receiving at least one synchronization signal and broadcast channel block (SSB), obtaining synchronization with a base station by using a synchronization signal included in the SSB, obtaining system information based on a master information block (MIB) included in the SSB, performing a random access procedure based on the system information,

transmitting a message for requesting transmission of an SSB-based discovery signal to the base station, and performing tracking for at least one of time and frequency based on the discovery signal.

As an example of the present disclosure, a method for operating a base station in a wireless communication system may include transmitting at least one synchronization signal and broadcast channel block (SSB), transmitting system information related to a random access channel, performing a random access procedure based on the system information, receiving a message for requesting the base station to transmit an SSB-based discovery signal, and transmitting the discovery signal.

As an example of the present disclosure, a terminal in a wireless communication system may include a transceiver and a processor coupled with the transceiver, and the processor may be configured to receive at least one synchronization signal and broadcast channel block (SSB), to obtain synchronization with a base station by using a synchronization signal included in the SSB, to obtain system information based on a master information block (MIB) included in the SSB, to perform a random access procedure based on the system information, to transmit a message for requesting transmission of an SSB-based discovery signal to the base station, and to perform tracking for at least one of time and frequency based on the discovery signal.

As an example of the present disclosure, a base station in a wireless communication system may include a transceiver and a processor coupled with the transceiver, and the processor may be configured to transmit at least one synchronization signal and broadcast channel block (SSB), to transmit system information related to a random access channel, to perform a random access procedure based on the system information, to receive a message for requesting the base station to transmit an SSB-based discovery signal, and to transmit the discovery signal.

As an example of the present disclosure, a communication device may include at least one processor and at least one computer memory coupled with the at least one processor and storing an instruction that instructs operations when executed by the at least one processor, and the operations may include receiving at least one synchronization signal and broadcast channel block (SSB), obtaining synchronization with a base station by using a synchronization signal included in the SSB, obtaining system information based on a master information block (MIB) included in the SSB, performing a random access procedure based on the system information, transmitting a message for requesting transmission of an SSB-based discovery signal to the base station, and performing tracking for at least one of time and frequency based on the discovery signal.

As an example of the present disclosure, a non-transitory computer-readable medium storing at least one instruction may include the at least one instruction that is executable by a processor, and the at least one instruction may control a device to receive at least one synchronization signal and broadcast channel block (SSB), to obtain synchronization with a base station by using a synchronization signal included in the SSB, to obtain system information based on a master information block (MIB) included in the SSB, to perform a random access procedure based on the system information, to transmit a message for requesting transmission of an SSB-based discovery signal to the base station, and to perform tracking for at least one of time and frequency based on the discovery signal.

The above-described aspects of the present disclosure are merely a part of exemplary embodiments of the present disclosure, and various embodiments reflecting technical features of the present disclosure may be derived and understood by those skilled in the art based on the detailed description of the present disclosure below.

Advantageous Effects

As is apparent from the above description, the embodiments of the present disclosure have the following effects.

According to the present disclosure, energy consumption of a base station can be reduced.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.

FIG. 1 illustrates an example of a structure of a wireless communication system to which the present disclosure may be applied.

FIG. 2 illustrates an example of a wireless device applicable to the present disclosure.

FIG. 3 illustrates a frame structure in a wireless communication system to which the present disclosure may be applied.

FIG. 4 illustrates an example of a resource grid in a wireless communication system to which the present disclosure may be applied.

FIG. 5 illustrates an example of a physical resource block in a wireless communication system to which the present disclosure may be applied.

FIG. 6 illustrates an example of a slot structure in a wireless communication system to which the present disclosure may be applied.

FIG. 7 illustrates examples of physical channels used in a wireless communication system, to which the present disclosure may be applied, and an example of a general signal transmission and reception method using the physical channels.

FIG. 8 illustrates the structure of an SSB (synchronization signal and broadcast channel block) applicable to the present disclosure.

FIG. 9 illustrates transmission of an SSB applicable to the present disclosure.

FIG. 10 illustrates examples of SSB candidate positions applicable to the present disclosure.

FIG. 11 illustrates an example of downlink time synchronization information applicable to the present disclosure.

FIG. 12 illustrates an example of a method for notifying an actually transmitted SSB.

FIG. 13 illustrates an example of a TRS procedure that is applicable to the present disclosure.

FIG. 14 illustrates an example of a difference in distance between a terminal and a macro cell and a small cell in a carrier aggregation environment.

FIG. 15 illustrates multiplexed examples of SSB and tracking reference signal (TRS) in a wireless communication system according to an embodiment of the present disclosure.

FIG. 16 illustrates SSB transmission timings of each case in a wireless communication system according to an embodiment of the present disclosure.

FIG. 17 illustrates an example of a procedure for signaling a structure of a cell discovery signal in a wireless communication system according to an embodiment of the present disclosure.

FIG. 18 illustrates examples of guard carriers that are applicable to a synchronization signal in a wireless communication system according to an embodiment of the present disclosure.

FIG. 19 illustrates examples of formats of a synchronous random access channel (RACH) preamble in a wireless communication system according to an embodiment of the present disclosure.

FIG. 20 illustrates other examples of formats of a synchronous RACH preamble in a wireless communication system according to an embodiment of the present disclosure.

FIG. 21 illustrates an example of a procedure for receiving a discovery signal in a wireless communication system according to an embodiment of the present disclosure.

FIG. 22 illustrates an example of a procedure for transmitting a discovery signal in a wireless communication system according to an embodiment of the present disclosure.

FIG. 23 illustrates an example of a procedure for requesting and transmitting a discovery signal in a wireless communication system according to an embodiment of the present disclosure.

Mode for Invention

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. ABS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial intelligence/machine learning (AI/ML), but may not be limited thereto.

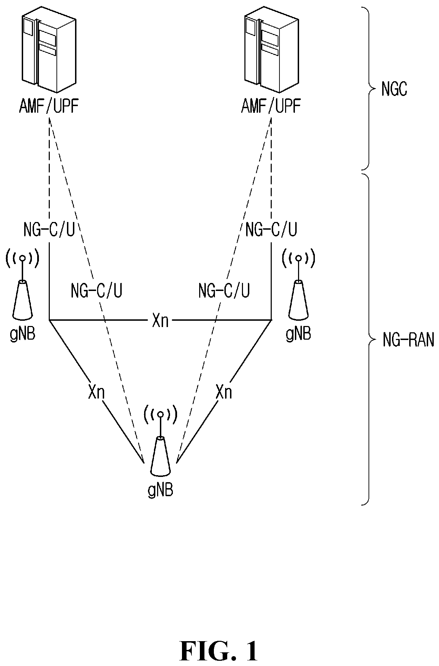

FIG. 1 exemplifies a structure of a wireless communication system to which the present disclosure may be applied. Referring to FIG. 1, NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

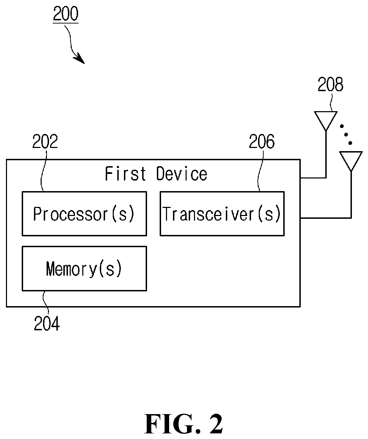

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

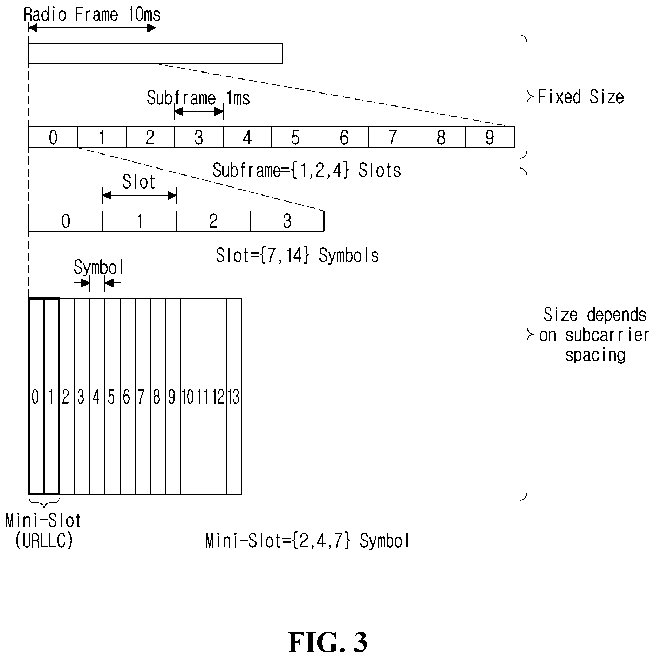

FIG. 3 exemplifies a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer N (or $\mu$). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu} \cdot 15[kHz]$ | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a dense-urban area, lower latency and a wider carrier bandwidth are supported, and when a SCS is 60 kHz or higher, a bandwidth wider than 24.25 GHz is supported to overcome a phase noise.

An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, sizes of various fields in a time domain are expressed as multiples of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} \cdot N_f/100)T_c = 10$ ms. Here, the radio frame is configured with 10 subframes having a duration of $T_{sf} = (\Delta f_{max} \cdot N_f/1000)T_c = 1$ ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration μ, slots are numbered in an increasing order of $n^{\mu}_s \in \{0, \cdots, N^{subframe,\mu}_{slot} - 1\}$ in a subframe and are numbered in an increasing order of $n^{\mu}_{s,j} \in \{0, \cdots, N^{frame,\mu}_{slot} - 1\}$ in a radio frame. One slot is configured with $N^{slot}_{symb}$ consecutive OFDM symbols and $N^{slot}_{symb}$ is determined according to CP. A start of a slot $n^{\mu}_s$ in a subframe is temporally arranged with a start of an OFDM symbol $n^{\mu}_s N^{slot}_{symb}$ in the same subframe. All terminals may not perform transmission and reception at the same time, which means that not all OFDM symbols of a downlink slot or an uplink slot are available.

Table 3 represents the number of OFDM symbols per slot ($N^{slot}_{symb}$), the number of slots per radio frame ($N^{frame,\mu}_{slot}$) and the number of slots per subframe ($N^{subframe,\mu}_{slot}$) in a normal CP and Table 4 represents the number of OFDM symbols per slot, the number of slots per radio frame and the number of slots per subframe in an extended CP.

[Table 3]

| μ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N^{slot}_{symb}$ | $N^{frame,\mu}_{slot}$ | $N^{subframe,\mu}_{slot}$ |
|---|---|---|---|
| 2 | 12 | 40 | 4 |

FIG. 3 is an example on μ=2 (SCS is 60 kHz), and referring to Table 3, 1 subframe may include 4 slots. 1 subframe= {1,2,4} slot shown in FIG. 3 is an example, and the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

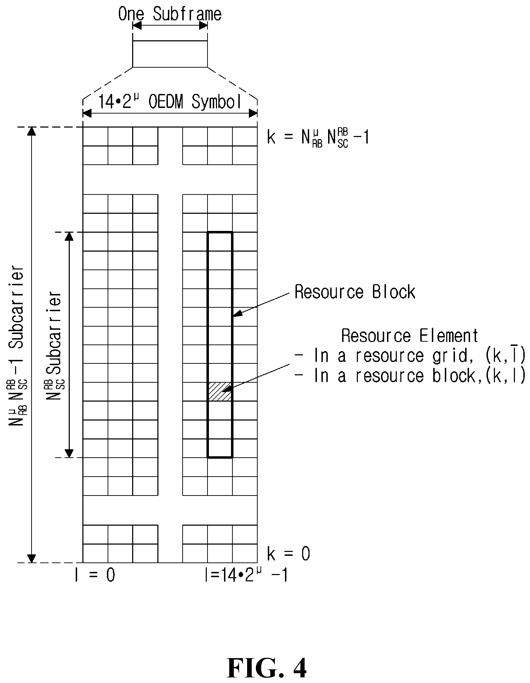

FIG. 4 exemplifies a resource grid in a wireless communication system to which the present disclosure may be applied.

Referring to FIG. 4, as an illustrative description, a resource grid is configured with $N_{RB}^{\mu} N_{SC}^{RB}$ subcarriers in a frequency domain, and one subframe is configured with $14 \cdot 2^{\mu}$ OFDM symbols, but the resource grid and the subframe are not limited thereto. In an NR system, a transmitted signal is described by one or more resource grids configured with $2^{\mu} N_{symb}^{(\mu)}$ OFDM symbols and $N_{RB}^{\mu} N_{SC}^{RB}$ subcarriers. Here, $N_{RB}^{\mu} \leq N_{RB}^{\max,u}$. The $N_{RB}^{\max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k, l'). Here, $k = 0, \ldots, N_{RB}^{\mu} N_{SC}^{RB} - 1$ is an index in a frequency domain and $l' = 0, \ldots, 2^{\mu} N_{symb}^{(\mu)} - 1$ refers to a position of a symbol in a subframe. When referring to a resource element in a slot, an index pair (k, l) is used. Here, $l = 0, \ldots, 2^{\mu} N_{symb}^{(\mu)} - 1$. A resource element (k, l') for $\mu$ and an antenna port p corresponds to a complex value, $a_{k,f}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB} = 12$ consecutive subcarriers in a frequency domain.

Point A plays a role as a common reference point of a resource block grid and is obtained as follows.

- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k, l) for a subcarrier spacing configuration $\mu$ in a frequency domain is given as in the following Equation 1.

[Equation 1]

$$n_{CRB}^{\mu} = \left\lfloor \frac{k}{N_{sc}^{RB}} \right\rfloor$$

In Equation 1, k is defined relatively to point A so that k=0 corresponds to a subcarrier centering around point A. Physical resource blocks are numbered from 0 to $N_{BWP,i}^{size,\mu} - 1$ in a bandwidth part (BWP) and i is the number of a BWP. A relationship between a physical resource block $n_{PRB}$ and a common resource block $n_{CRB}$ in BWP i is given by the following Equation 2.

[Equation 2]

$$n_{CRB}^{\mu} = n_{PRB}^{\mu} + N_{BWP,i}^{start,\mu}$$

$$N_{BWP,i}^{start,\mu}$$ is a common resource block that a BWP starts relatively to common resource block 0.

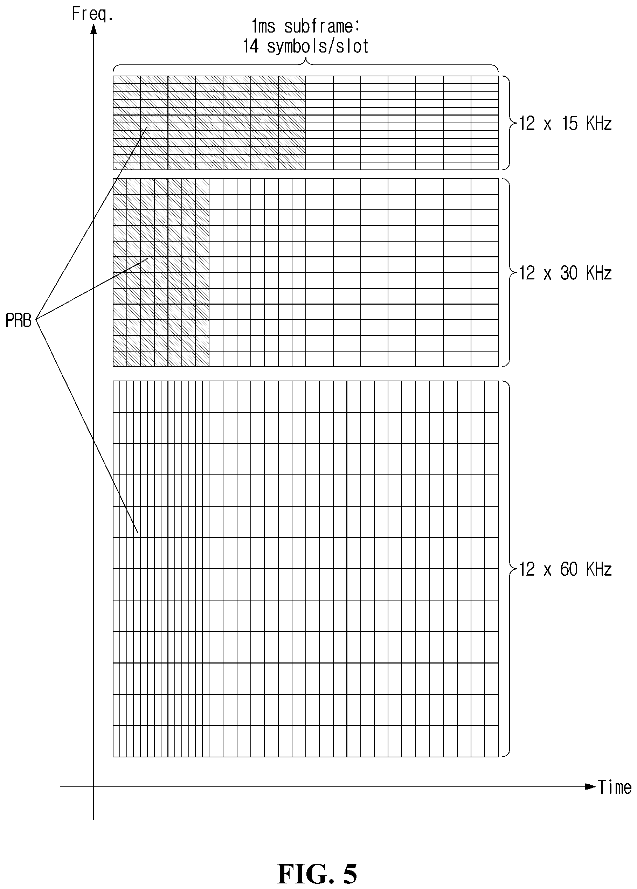

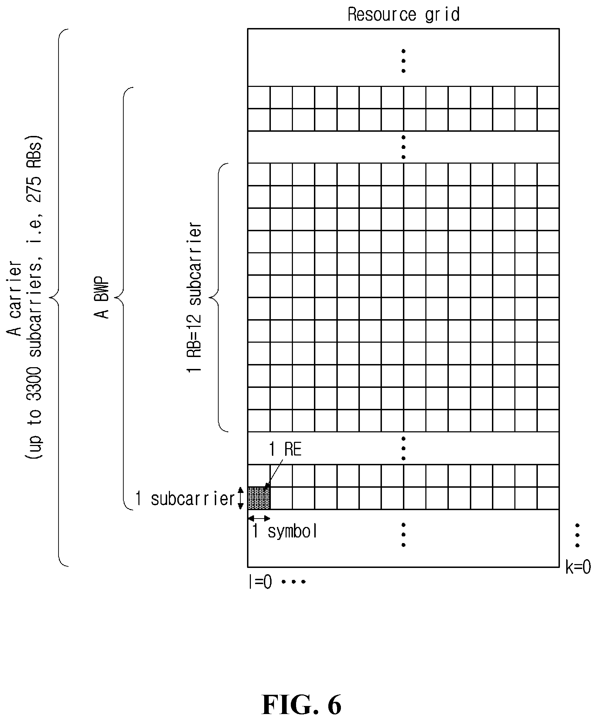

FIG. 5 exemplifies a physical resource block in a wireless communication system to which the present disclosure may be applied. In addition, FIG. 6 exemplifies a slot structure in a wireless communication system to which the present disclosure may be applied.

Referring to FIG. 5 and FIG. 6 , a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

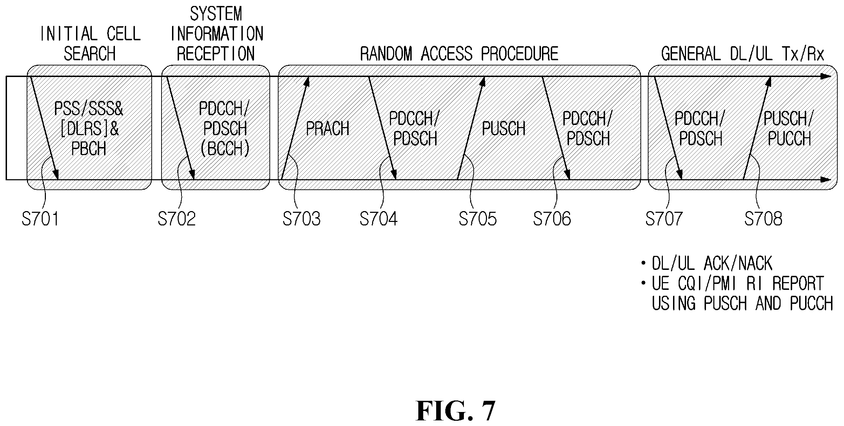

FIG. 7 exemplifies physical channels used in a wireless communication system, to which the present disclosure may be applied, and a general signal transmission and reception method using the physical channels.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

SSB (Synchronization Signal Block) transmission and related operation

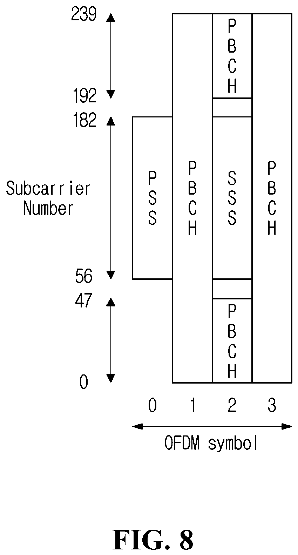

FIG. 8 illustrates the structure of an SSB (synchronization signal and broadcast channel block) applicable to the present disclosure. FIG. 8 illustrates an SSB structure. A terminal may perform cell search, system information acquisition, beam alignment for initial access, DL measurement, etc. based on an SSB. The SSB is used interchangeably with an SS/PBCH (Synchronization Signal/Physical Broadcast channel) block.

Referring to FIG. 8, the SSB is composed of a PSS, an SSS, and a PBCH. The SSB is composed of 4 consecutive OFDM symbols, and the PSS, PBCH, SSS/PBCH, and PBCH are transmitted for each OFDM symbol. The PSS and the SSS are each composed of 1 OFDM symbol and 127 subcarriers, and the PBCH is composed of 3 OFDM symbols and 576 subcarriers. Polar coding and QPSK (Quadrature Phase Shift Keying) are applied to the PBCH. The PBCH is composed of a data RE and a DMRS (Demodulation Reference Signal) RE for each OFDM symbol. There are 3 DMRS REs for each RB, and there are 3 data REs between DMRS REs.

Cell search

Cell search means a process in which a terminal acquires time/frequency synchronization of a cell and detects the cell ID (Identifier) (e.g., Physical layer Cell ID, PCID) of the cell. The PSS is used to detect a cell ID within a cell ID group, and the SSS is used to detect a cell ID group. The PBCH is used for SSB (time) index detection and half-frame detection.

The cell search process of the terminal may be summarized as shown in [Table 5] below.

[Table 5]

|  | Type of Signals | Operations |
|---|---|---|
| 1st step | PSS | * SS/PBCH block (SSB) symbol timing acquisition<br>* Cell ID detection within a cell ID group (3 hypothesis) |
| 2nd Step | SSS | * Cell ID group detection (336 hypothesis) |
| 3rd Step | PBCH DMRS | * SSB index and Half frame (HF) index(Slot and frame boundary detection) |
| 4th Step | PBCH | * Time information (80 ms, System Frame Number (SFN), SSB index, HF)* Remaining Minimum System Information (RMSI) Control resource set (CORE-SET)/Search space configuration |
| 5th Step | PDCCH and PDSCH | * Cell access information* RACH configuration |

There are 336 cell ID groups, and there are 3 cell IDs for each cell ID group. There are a total of 1008 cell IDs, and the cell ID may be defined by [Equation 3].

[Equation 3]

$$N_{ID}^{cell} = 3N_{ID}^{(1)} + N_{ID}^{(2)} \quad where \ N_{ID}^{(1)} \in \{0, 1, \cdots, 335\} \ and \ N_{ID}^{(2)} \in \{0, 1, 2\}$$

where, $N_{ID}^{cell}$ denotes a cell ID (e.g., PCID). $N_{ID}^{(1)}$ denotes a cell ID group and is provided/obtained through an SSS.

$N_{ID}^{(2)}$ denotes a cell ID within a cell ID group and is provided/obtained through a PSS.

A PSS sequence $d_{PSS}(n)$ may be defined to satisfy [Equation 4].

[Equation 4]

$$d_{PSS}(n)=1-2x(m)$$
$$m=(n+43N_{ID}^{(2)}) \bmod 127$$

where, $0 \leq n < 127$, $x(i+7)=(x(i+4)+x(i)) \bmod 2$, and $[x(6)x(5)x(4)x(3)x(2)x(1)x(0)]=[1\ 1\ 1\ 0\ 1\ 1\ 0]$.

An SSS sequence $d_{SSS}(n)$ may be defined to satisfy [Equation 5].

[Equation 5]

$$d_{SSS}(n)=[1-2x_0((n+m_0) \bmod 127)][1-2x_1((n+m_1) \bmod 127)]$$
$$m_0=15 \lfloor \frac{N_{ID}^{(1)}}{112} \rfloor + 5N_{ID}^{(2)}$$
$$m_1=N_{ID}^{(1)} \bmod 112$$

where, $0 \leq n < 127$, $x_0(i+7)=(x_0(i+4)+x_0(i)) \bmod 2$,

$$x_1(i+7)=(x_1(i+1)+x_1(i)) \bmod 2 ,$$

$$[x_0(6)\ x_0(5)\ x_0(4)\ x_0(3)\ x_0(2)\ x_0(1)\ x_0(0)]=[0\ 0\ 0\ 0\ 0\ 0\ 1] ,$$

and

$$[x_1(6)\ x_1(5)\ x_1(4)\ x_1(3)\ x_1(2)\ x_1(1)\ x_1(0)]=[0\ 0\ 0\ 0\ 0\ 0\ 1] .$$

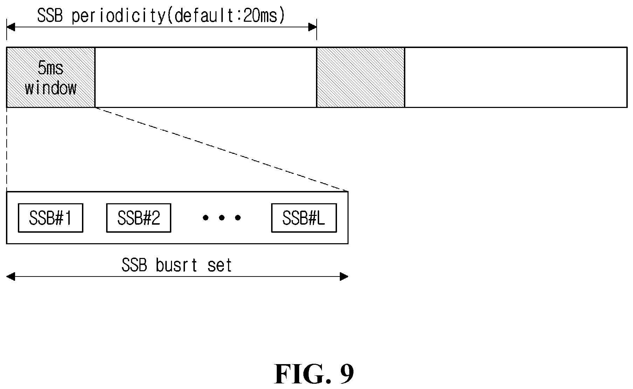

FIG. 9 illustrates transmission of an SSB applicable to the present disclosure. The SSB is transmitted periodically according to the SSB periodicity. The SSB basic period assumed by the terminal during initial cell search is defined as 20 ms. After cell access, the SSB may be set to one of {5 ms, 10 ms, 20 ms, 40 ms, 80 ms, 160 ms} by the network (e.g., base station). An SSB burst set is configured at the beginning of the SSB period. The SSB burst set consists of a 5-ms time window (i.e., half-frame), and an SSB may be transmitted at most L times within the SSB burst set. The maximum number of SSB transmissions L may be given as follows depending on the frequency band of the carrier. One slot includes at most two SSBs.

- For frequency range up to 3 GHz, L = 4
- For frequency range from 3GHz to 6 GHz, L = 8
- For frequency range from 6 GHz to 52.6 GHz, L = 64

The temporal position of a candidate SSB within an SSB burst set may be defined as follows according to the SCS. The temporal position of a candidate SSB is indexed from 0 to L-1 (SSB index) in time order within the SSB burst set (i.e., half-frame). Candidate SSB and SSB candidate are used interchangeably in the specification.

- Case A - 15 kHz SCS: The index of the starting symbol of the candidate SSB is given as {2, 8} + 14*n.
- For operation without shared spectrum channel access (e.g., L-band, LCell): If the carrier frequency is 3 GHz or less, n = 0, 1. If the carrier frequency is 3 GHz to 6 GHz, n = 0, 1, 2, 3.
- For operation with shared spectrum channel access (e.g., U-band, UCell): n=0, 1, 2, 3, 4.
- Case B - 30 kHz SCS: The index of the starting symbol of the candidate SSB is given as {4, 8, 16, 20} + 28*n. If the carrier frequency is 3 GHz or less, n=0. If the carrier frequency is 3 GHz to 6 GHz, n=0, 1.
- Case C - 30 kHz SCS: The index of the starting symbol of the candidate SSB is given as {2, 8} + 14*n.
- For operation without shared spectrum channel access: (1) For paired spectrum operation, when the carrier frequency is 3 GHz or less, n=0, 1. When the carrier frequency is within FR1 and greater than 3 GHz, n=0, 1, 2, 3. (2) For non-paired spectrum operation, when the carrier frequency is 2.4 GHz or less, n=0, 1. When the carrier frequency is within FR1 and greater than 2.4 GHz, n=0, 1, 2, 3.

- For operation without shared spectrum channel access: n=0, 1, 2, 3, 4, 6, 7, 8, 9.
- Case D - 120 kHz SCS: The index of the starting symbol of the candidate SSB is given as {4, 8, 16, 20} + 28*n. For carrier frequencies within FR2, n=0, 1, 2, 3, 5, 6, 7, 8, 10, 11, 12, 13, 15, 16, 17, 18.
- Case E - 240 kHz SCS: The index of the starting symbol of the candidate SSB is given as {8, 12, 16, 20, 32, 36, 40, 44} + 56*n. For carrier frequencies within FR2, n=0, 1, 2, 3, 5, 6, 7, 8.

For operation with shared spectrum channel access, in the case of a shared spectrum channel access operation, the terminal assumes that the SSB transmission within a half-frame is within a discovery burst transmission window starting from the first symbol of the first slot within the half-frame. The terminal may be provided with a discovery burst transmission window period for each serving cell. If the discovery burst transmission window period is not provided, the terminal regards the discovery burst transmission window period as a half-frame. For each serving cell, the terminal assumes that the repetition period of the discovery burst transmission window is the same as the repetition period of the half-frame for SSB reception. The terminal may assume that among the SSBs of the serving cell, SSB(s) having the same

$$\left( N_{DM\text{-}RS}^{PBCH} \bmod N_{SSB}^{QCL} \right)$$ value within the same discovery burst transmission window or across different discovery burst transmission windows are in a QCL (co-located) relationship. $N_{DM\text{-}RS}^{PBCH}$ represents the DM-RS sequence index of the PBCH of SSB, and $N_{SSB}^{QCL}$ is (i) provided by ssbPositionQCL-Relationship, or (ii) if ssbPositionQCL-Relationship is not provided, may be obtained from the MIB (master information block) of the SSB based on [Table 6].

[Table 6]

| subCarrierSpacingCommon | [LSB of ssb-SubcarrierOffset] | $N_{SSB}^{QCL}$ |
|---|---|---|
| scs 15 or 60 | 0 | 1 |
| scs 15 or 60 | 1 | 2 |
| scs 30 or 120 | 0 | 4 |
| scs 30 or 120 | 1 | 8 |

ssbSubcarrierSpacingCommon represents SCS of RMSI only for "operation without shared spectrum". The terminal assumes that the number of SSBs transmitted on the serving cell within the discovery burst transmission window is no more than $N_{SSB}^{QCL}$. The terminal may determine the SSB index according to $\left( N_{DM\text{-}RS}^{PBCH} \bmod N_{SSB}^{QCL} \right)$ or

$\left( i \bmod N_{SSB}^{QCL} \right)$. Here, i represents a candidate SSB index. Accordingly, more than one candidate SSB may correspond to one SSB index. Candidate SSBs corresponding to the same SSB index are QCLed.

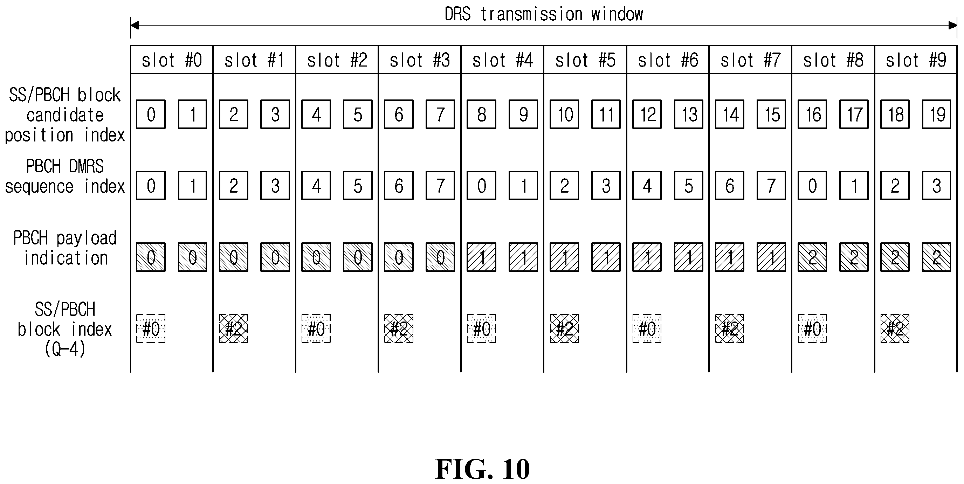

FIG. 10 illustrates examples of SSB candidate positions applicable to the present disclosure. FIG. 10 illustrates a case where Q is 4 and ssb-PositionsInBurst is set to '10100000'. In this case, only SSBs with SSB (SS/PBCH block) indexes of #0/#2 may be transmitted. ssb-PositionsInBurst and Q may be used to provide rate matching pattern within the DRS (Discovery Reference Signal) transmission window (or, discovery burst transmission window). For example, the terminal may perform rate matching for all SSB candidate position indexes QCLed with the actual transmitted SSB indexes provided by ssb-PositionsInBurst. In FIG. 10, the terminal may perform rate matching for time/frequency resources of SSB candidate position indexes 0/2/4/6/8/10/12/14/16/18. Therefore, when receiving a PDSCH scheduled by a PDCCH scrambled with CRC by C-RNTI, MCS-C-RNTI, CS-RNTI, RA-RNTI, MsbB-RNTI, P-RNTI, TC-RNTI (or a PDSCH with SPS (or with CRC) is scrambled by SI-RNTI and the system information indicator in the PDCCH (i.e., DCI) is set to 1), the terminal may assume SSB transmission according to ssb-PositionsInBurst if the PDSCH resource allocation overlaps with a PRB including SSB transmission resources (e.g., SS/PBCH block candidate position indexes 0/2/4/6/8/10/12/14/16/18). That is, the terminal may assume that the PRB including SSB transmission resources in the OFDM symbol in which SSB is transmitted is not available for PDSCH (i.e., not mapped).

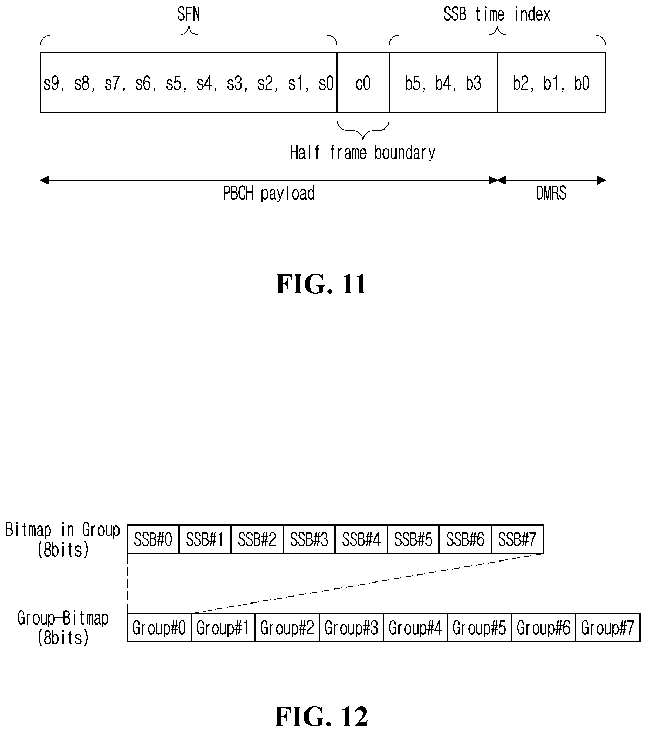

FIG. 11 illustrates an example of downlink time synchronization information applicable to the present disclosure. FIG. 11 illustrates that a terminal acquires information regarding DL time synchronization. The terminal may acquire DL synchronization by detecting an SSB. The terminal may identify the structure of an SSB burst set based on the detected SSB index, and may detect a symbol/slot/half-frame boundary accordingly. The number of the frame/half-frame to which the detected SSB belongs may be identified using SFN information and half-frame indication information.

Specifically, the terminal may obtain 10-bit SFN (System Frame Number) information from the PBCH (s0 to s9). Of the 10-bit SFN information, 6 bits are obtained from a MIB (Master Information Block) and the remaining 4 bits are obtained from a PBCH TB (Transport Block).

Next, the terminal may obtain 1-bit half-frame indication information (c0). When the carrier frequency is 3 GHz or less, the half-frame indication information may be implicitly signaled using a PBCH DMRS. The PBCH DMRS indicates 3-bit information by using one of 8 PBCH DMRS sequences. Therefore, in the case of L=4, among the 3 bits that may be indicated using 8 PBCH DMRS sequences, 1 bit remaining after indicating the SSB index may be used to indicate the half-frame.

Finally, the terminal may obtain the SSB index based on the DMRS sequence and the PBCH payload. The SSB candidates are indexed from 0 to L-1 in time order within the SSB burst set (i.e., half-frame). When L = 8 or 64, the Least Significant Bit (LSB) 3 bits of the SSB index may be indicated using 8 different PBCH DMRS sequences (b0 to b2). When L = 64, the Most Significant Bit (MSB) 3 bits of the SSB index are indicated via the PBCH (b3 to b5). When L = 2, the LSB 2 bits of the SSB index may be indicated using 4 different PBCH DMRS sequences (b0, b1). When L = 4, among the 3 bits that may be indicated using 8 PBCH DMRS sequences, 1 bit remaining after indicating the SSB index may be used to indicate the half-frame (b2).

FIG. 12 illustrates an example of a method for notifying an actually transmitted SSB

A maximum of L SSBs may be transmitted within an SSB burst set, and the number/positions of actually transmitted SSBs may vary according to each base station/cell. The number/positions of actually transmitted SSBs is used for rate-matching and measurement, and information on an actually transmitted SSB (e.g., ssb-PositionsInBurst) is indicated as follows.

- In relation to rate-matching: the information may be indicated through terminal-specific RRC signaling or RMSI. Terminal-specific RRC signaling includes a full bit map (e.g., a length of L) in both frequency ranges below 6 GHz and above 6 GHz. On the other hand, RMSI includes a full bit map below 6 GHz and a compressed form of bit map above 6 GHz as illustrated. Specifically, information on an actually transmitted SSB may be indicated by using group-bit map (8 bits) + intra-group bit map (8 bits). Herein, a resource (e.g., RE) indicated through terminal-specific RRC signaling or RMSI may be reserved for SSB transmission, and a PDSCH/PUSCH may be rate-matched by considering an SSB resource.
- In relation to measurement: in a RRC-connected mode, a network (e.g., base station) may include an SSB set to be measured within a measurement period. The SSB set may be indicated according to each frequency layer. In case there is no indication of the SSB set, a default SSB set is used. The default SSB set includes all SSBs within a measurement period. An SSB set may be indicated by using a full (e.g., an L length) bit map of RRC signaling. In a RRC idle mode, the default SSB set is used.

CSI-RS for tracking (or TRS)

For the function of a cell-specific reference signal (CRS) that is used for fine time and frequency tracking in the LTE system, NR defines a tracking reference signal (TRS). However, unlike the CRS of the LTE system, the TRS defined in NR is not based on an always-on manner. The TRS defined in NR enables a terminal to estimate a timing offset, a delay spread, a frequency offset, and a doppler spread. The TRS is supported both below 6 GHz (FR1) and above 6 GHz (FR2).

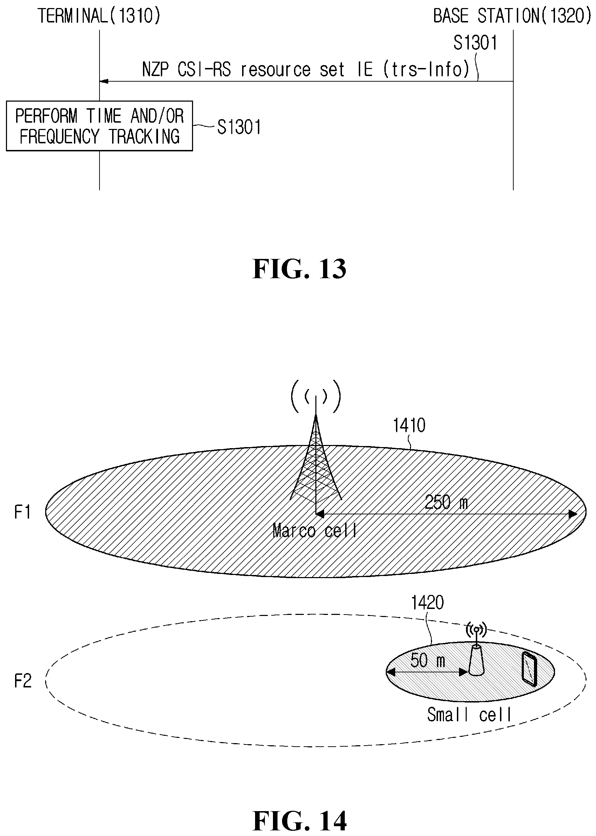

A periodic TRS is mandatory in both FR1 and FR2, and an aperiodic TRS is optional in both FR1 and FR2. FIG. 13 illustrates an example of a TRS procedure that is applicable to the present disclosure. Referring to FIG. 13, at step S1301, a terminal 1310 receives a NZP- CSI-RS-ResourceSet information element (IE) including a trs-Info parameter from a base station 1320. The trs-Info parameter is a parameter, which indicates whether or not all NZP-CSI-RS resources in a CSI-RS resource set have a same antenna port, and is set in a NZP-CSI-RS resource set unit.

CSI-RS resources in a CSI-RS resource set with a trs-Info parameter set to 'ON' are configured as 1-port CSI-RS resources. Periodic CSI-RS resources in a CSI-RS resource set with a trs-Info parameter set to 'ON' have a same periodicity, bandwidth and subcarrier location. In addition, aperiodic CSI-RS resources in a CSI-RS resource set with a trs-Info parameter set to 'ON' have a same bandwidth with a same RB location and a same number of CSI-RS resources. If an aperiodic TRS is configured, a QCL reference of the TRS should be associated with a periodic TRS, and QCL types are 'QCL-Type-A' and 'QCL-TypeD'. At step S1303, the terminal 1310 performs time and/or frequency tracking through CSI-RS resources in a CSI-RS resource set with trs-Info set to 'ON'.

<u>Specific embodiment of the present disclosure</u>

Hereinafter, the present invention is to operate a cell discovery signal in a wireless communication system, and proposes a structure of a cell discovery signal and a technology for transmitting and receiving a cell discovery signal of the proposed structure.

FIG. 14 illustrates an example of a difference in distance between a terminal and a macro cell and a small cell in a carrier aggregation environment. Referring to FIG. 14, in a carrier aggregation (CA) environment (e.g., a combination of 15 kHz SCS Pcell in FR1 + 120 kHz SCS Scell in FR2) for the macro cell 1410 and the small cell 1420, when the difference in the distance between the terminal and the macro cell and the distance between the terminal and the small cell is approximately 175 m or more, propagation delay may be greater than a 20 kHz SCS CP length (= approximately 586 nsec). Here, the macro cell may include at least one of a primary cell (Pcell) or a primary-secondary cell (PScell), and the small cell may include a secondary cell.

In such a carrier aggregation situation, a situation may occur where a difference in signal reception timing between the primary cell and the secondary cell is greater than the CP length based on the SCS of the secondary cell. Therefore, a signal to compensate for this needs to be transmitted on the secondary cell.

The existing NR system allows the terminal to receive an SSB (SS (synchronization signal)/PBCH (physical broadcast channel) block) and/or a TRS (tracking reference signal) on the secondary cell, in order to obtain fine time/frequency synchronization of the secondary cell in preparation for the aforementioned situation. For example, as illustrated in FIG. 1, in the case of carrier aggregation for the FR1 serving cell and the FR2 serving cell, the terminal may include separate RF chains and frequency oscillators for FR1 and FR2. In this case, the terminal obtains coarse time/frequency axis synchronization by utilizing at least one of a primary synchronization signal (PSS), a secondary synchronization signal (SSS), or a PBCH DM-RS, and additionally obtains fine time/frequency axis synchronization through a TRS, thereby minimizing the degree of time/frequency synchronization misalignment between the primary cell or the primary-secondary cell and the secondary cell.

However, when an SSB and a TRS are always transmitted on the secondary cell for the purpose of time/-frequency synchronization as described above, power consumption may be high in terms of signal transmission of the base station and reception complexity of the terminal. In particular, power consumption may occur since the base station shall periodically transmit signals such as an SSB and a TRS even in a situation where there is no data to transmit or receive. Recently, energy saving of base stations has been considered important in wireless communication systems including 3GPP because it can contribute to building eco-friendly networks by reducing carbon emissions and reducing operational expenditure (OPEX) of communication industry operators. As such, due to the increased interest in base station energy saving, a new SI (study item) called "study on network energy savings" was approved in 3GPP NR release 18.

Therefore, hereinafter, the present disclosure proposes a method of reconstructing signals required for time/-frequency synchronization acquisition as intensively as possible on the time axis. Through this, by reducing the synchronization acquisition procedure of the terminal, the terminal implementation complexity and terminal power consumption can be reduced. In addition, the base station can save energy consumed for signal transmission required for synchronization acquisition of the terminal. In addition, the signals required for time/frequency axis synchronization acquisition include cell ID information of the serving cell, so that a cell discovery function can be provided. Hereinafter, in the present disclosure, a set of signals transmitted by the base station for time/frequency synchronization acquisition of the serving cell may be referred to as an ES-DRS (energy saving discovery signal). In addition, hereinafter, the present disclosure proposes a method of configuring an ES-DRS signal and a method of signaling the ES-DRS signal.

According to various embodiments, a structure of an ES-DRS may be defined in various ways. For example, an ES-DRS may be defined in various ways according to an SSB-TRS multiplexing scheme, whether or not there is a PBCH, and whether or not an SSB is replaced. Hereinafter, some examples of structures of ES-DRSs applicable to the present disclosure will be described. However, even if an ES-DRS with a different structure from the example structures described below is used, embodiments described below will be applicable.

[Example #1 of ES-DRS structure] A method of configuring an ES-DRS with a single burst of a TRS and an SSB, while retaining a structure of the SSB

According to [Example #1 of ES-DRS structure] of the present disclosure, an SSB structure of an existing NR system may retained, and at least one TRS may be configured in an SSB symbol or a neighbor symbol of SSB. Even if an SSB transmitted in a secondary cell is transmitted in a frequency position not in a synchronization raster, a cell-defining SSB (CD-SSB) needs to be transmitted to support a function like reading of automatic neighbor relation (ANR) or cell global identify (CGI). A CD-SSB refers to an SSB that provides configuration information for a monitoring occasion at which a PDCCH including scheduling information of a physical downlink shared channel (PDSCH) carrying SIB1 can be transmitted. Herein, the monitoring occasion may mean CORESET#0 and a type0-PDCCH common search space (CSS) set. Accordingly, PBCH information for an SSB transmitted in a secondary cell needs to be provided.

As described above, because of a frequency band difference between a primary cell and a secondary cell, if a terminal includes different RFs or different oscillators for the primary cell and the secondary cell, existing structures of both SSB and TRS are expected to be necessary. Accordingly, the present disclosure proposes an ES-DRS structure in which an SSB structure is retained and a TRS and an SSB are transmitted by being configured into a single burst. When an SSB and a TRS are configured into a single burst, as compared to separate transmission of the SSB and the TRS, the advantage is that energy consumption of a base station is reduced.

[Example #1-1 of ES-DRS structure] An SSB and a TRS, which constitute an ES-DRS, are frequency-domain multiplexed and are configured into a single burst.

In an NR system, an SSB consists of 4 OFDM symbols.

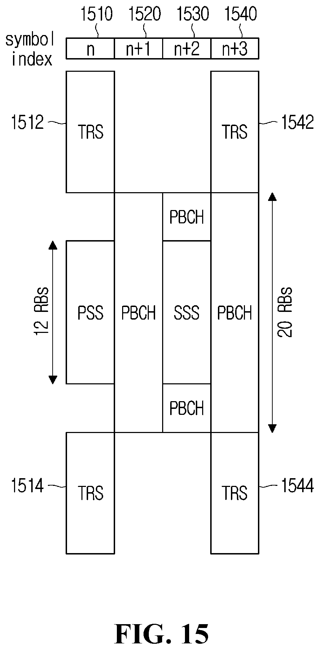

FIG. 15 illustrates multiplexed examples of SSB and tracking reference signal (TRS) in a wireless communication system according to an embodiment of the present disclosure. FIG. 15 illustrates an example of an SSB and TRS transmission structure. Referring to FIG. 15, 4 OFDM symbols include a symbol #n 1510, a symbol #n+1 1520, a symbol #n+2 1530, and a symbol #n+3 1540. According to an embodiment, TRSs 1512, 1514, 1542 and 1544 may be placed at both ends of the frequency axis of SSB of 2 symbols among the 4 OFDM symbols 1510, 1520, 930 and 1540. In FIG. 15, the TRSs 1512, 1514, 1542 and 1544 are placed at both ends of the frequency axis of the symbol #n 1510 and the symbol #n+3 1530. However, according to another embodiment, the TRSs 1512, 1514, 1542 and 1544 may be placed at both ends of the frequency axis of the symbol #n+1 1520 and the symbol #n+3 1540 or be placed at both ends of the frequency axis of the symbol #n 910 and the symbol #n+2 1530. Thus, since a broadband TRS wider than an SSB is provided, from the perspective of a terminal, time axis synchronization accuracy may be enhanced as compared to time axis synchronization that is obtained only through a BBS.

A symbol spacing of a TRS may determine the acquisition accuracy of frequency axis synchronization. Specifically, as the symbol spacing becomes greater, the accuracy may become higher. In this regard, to maximize a symbol spacing of a TRS that is frequency-domain multiplexed with an SSB, time-axis placement of the TRS may be preferrable as shown in FIG. 15. Herein, in a PSS symbol (e.g., the symbol #n), the TRS may be placed in a same frequency area as the symbol #n+3, as shown in FIG. 15, or may be mapped discontinuously on the frequency axis, while 12 RBs occupied by the PSS are emptied.

[Example #1-2 of ES-DRS structure] An SSB and a TRS, which constitute an ES-DRS, are frequency-domain/time-domain multiplexed and are configured into a single burst.

An ES-DRS with the proposed structure of [Example #1-1 of ES-DRS] may have a maximum space of 3 symbols between symbols in which TRSs are placed. On the other hand, in an NR system, TRSs are basically defined to be transmitted at an interval of 4 symbols. Accordingly, in order to provide an acquisition accuracy of frequency axis synchronization at a same level as a TRS with a 4 symbols spacing, it is proposed that an ES-DRS has a TDM/FDM structure between an SSB and a TRS.

[Table 7] below shows the cell search procedure extracted from V17.2.0 of TS 38.213.

[Table 7]

| 4.1 Cell search |
| --- |
| Cell search is the procedure for a UE to acquire time and frequency synchronization with a cell and to detect the physical layer Cell ID of the cell. |
| A UE receives the following synchronization signals (SS) in order to perform cell search: the primary synchronization signal (PSS) and secondary synchronization signal (SSS) as defined in [4, TS 38.211]. |
| A UE assumes that reception occasions of a physical broadcast channel (PBCH), PSS, and SSS are in consecutive symbols, as defined in [4, TS 38.211], and form a SSB. The UE assumes that SSS, PBCH DM-RS, and PBCH data have same EPRE. The UE may assume that the ratio of PSS EPRE to SSS EPRE in a SSB is either 0 dB or 3 dB. If the UE has not been provided dedicated higher layer parameters, the UE may assume that the ratio of PDCCH DMRS EPRE to SSS EPRE is within -8 dB and 8 dB when the UE monitors PDCCHs for a DCI format 1_0 with CRC scrambled by SI-RNTI, P-RNTI, or RA-RNTI, or for a DCI format 2_7. |
| For a half frame with SSBs, the first symbol indexes for candidate SSBs are determined according to the SCS of SSBs as follows, where index 0 corresponds to the first symbol of the first slot in a half-frame. |
| - Case A - 15 kHz SCS: the first symbols of the candidate SSBs have indexes of $\{2,8\}+14 \cdot n$. |
| - For operation without shared spectrum channel access: |
| - For carrier frequencies smaller than or equal to 3 GHz, n=0,1. |
| - For carrier frequencies within FR1 larger than 3 GHz, n=0,1,2,3. |

- For operation with shared spectrum channel access, as described in [15, TS 37.213], n=0,1,2,3,4.

- Case B - 30 kHz SCS: the first symbols of the candidate SSBs have indexes {4,8,16,20}+28 ·n. For carrier frequencies smaller than or equal to 3 GHz, n=0. For carrier frequencies within FR1 larger than 3 GHz, n=0,1.

- Case C - 30 kHz SCS: the first symbols of the candidate SSBs have indexes {2,8}+14 ·n.

- For operation without shared spectrum channel access

- For paired spectrum operation

- For carrier frequencies smaller than or equal to 3 GHz, n=0,1. For carrier frequencies within FR1 larger than 3 GHz, n=0,1,2,3.

- For unpaired spectrum operation

- For carrier frequencies smaller than 1.88 GHz, n=0,1. For carrier frequencies within FR1 equal to or larger than 1.88 GHz, n=0,1,2,3.

- For operation with shared spectrum channel access, n=0,1,2,3,4,5,6,7,8,9.

- Case D - 120 kHz SCS: the first symbols of the candidate SSBs have indexes {4,8,16,20}+28 ·n. For carrier frequencies within FR2, n=0,1,2,3,5,6,7,8,10,11,12,13,15,16,17,18.

- Case E - 240 kHz SCS: the first symbols of the candidate SSBs have indexes {8,12,16,20,32,36,40,44}+56 ·n. For carrier frequencies within FR2-1, n=0,1,2,3,5,6,7,8.

- Case F - 480 kHz SCS: the first symbols of the candidate SSBs have indexes {2,9}+14 ·n. For carrier frequencies within FR2-2, n=0,1,2,3,4,5,6,7,8,9,10,11,12,13,14,15,16,17,18,19,20,21,22,23,24,25,26,27,28,29,30, 31.

- Case G - 960 kHz SCS: the first symbols of the candidate SSBs have indexes {2,9}+14 ·n. For carrier frequencies within FR2-2, n=0,1,2,3,4,5,6,7,8,9,10,11,12,13,14,15,16,17,18,19,20,21,22,23,24,25,26,27,28,29,30, 31.

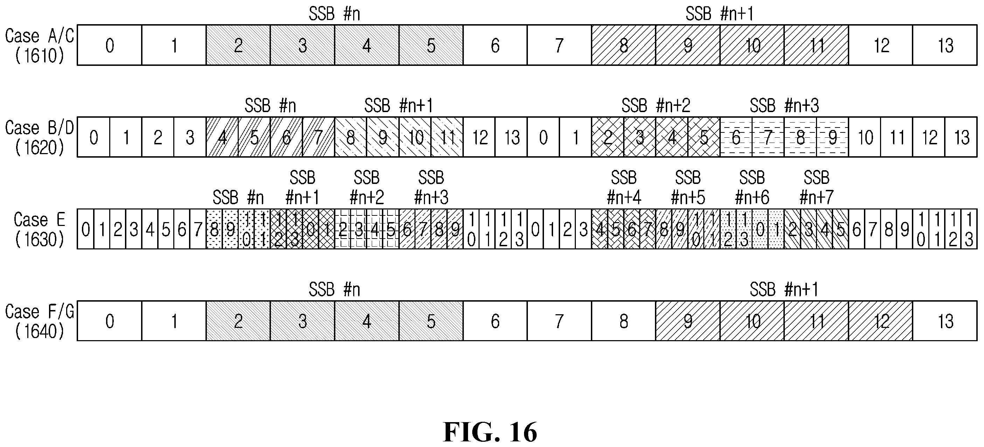

In [Table 7], the transmission location within the slot of each SCS of SSB, i.e. each Case, may be expressed as in FIG. 16. FIG. 16 illustrates SSB transmission timings of each case in a wireless communication system according to an embodiment of the present disclosure. Referring to FIG. 16, an embodiment of an ES-DRS configuration for each Case will be described as follows.

- Case A or Case C 1610: For SSB#n, corresponding TRSs may be transmitted in symbols #1 and #5, or symbols #2 and #6, and for SSB#n+1, corresponding TRSs may be transmitted in symbols #7 and #11, or symbols #8 and #12. Through this, the symbol interval between TRSs may be made the same as the symbol interval between TRSs in NR.

According to one embodiment, when a TRS is transmitted in symbol #2 or symbol #8, which is a PSS symbol, 20 RBs occupied by a PBCH or 12 RBs occupied by a PSS in the symbol are emptied, and the TRS may be mapped discontinuously on the frequency axis.

According to one embodiment, when the TRS is transmitted in a symbol to which the SSB is not mapped (e.g., symbol #1, symbol #6, symbol #7, or symbol #12), 20 RBs occupied by a PBCH or 12 RBs occupied by a PSS are emptied, and the TRS may be mapped discontinuously on the frequency axis, or may be mapped continuously without a gap on the frequency axis.

According to one embodiment, when the TRS is transmitted in a PBCH symbol (e.g., symbol #5 or symbol #11), 20 RBs occupied by a PBCH are emptied, and the TRS may be mapped discontinuously on the frequency axis.

- Case B or Case D 1620: For SSB#n, corresponding TRSs may be transmitted in symbol #3 and symbol #7, for SSB#n+1, corresponding TRSs may be transmitted in symbol #8 and symbol #12, for SSB#n+2, corresponding TRSs may be transmitted in symbol #1 and symbol #5, and for SSB#n+3, corresponding TRSs may be transmitted in symbol #6 and symbol #10. Through this, the symbol interval between TRSs may be made the same as the symbol interval between TRSs in NR.

According to one embodiment, when a TRS is transmitted in a PSS symbol (e.g., symbol #8 for SSB#n+1, or symbol #6 for SSB#n+3), 20 RBs occupied by a PBCH or 12 RBs occupied by a PSS may be emptied, and the TRS may be mapped discontinuously on the frequency axis.

According to one embodiment, when a TRS is transmitted in a symbol to which an SSB is not mapped (e.g., symbol #3 for SSB#n, symbol #12 for SSB#n+1, symbol #1 for SSB#n+2, or symbol #10 for SSB#n+3), 20 RBs occupied by a PBCH or 12 RBs occupied by a PSS are emptied, and the TRS may be mapped discontinuously on the frequency axis or continuously without a gap on the frequency axis.

According to one embodiment, when a TRS is transmitted in a PBCH symbol (e.g., symbol #7 for SSB#n, symbol #5 for SSB#n+2), 20 RBs occupied by a PBCH are emptied, and the TRS may be mapped discontinuously on the frequency axis.

- Case E 1630: Unlike the other cases, in Case E, since it is difficult to configure TRSs for each SSB with an interval of 4 symbols, the transmission intervals of the TRSs may be made to have an interval of 5 symbols. Specifically, for SSB#n, corresponding TRSs may be transmitted in symbols #6 and #11, for SSB#n+1, corresponding TRSs may be transmitted in symbols #7 and #12, for SSB#n+2, corresponding TRSs may be transmitted in symbols #5 and #10, and for SSB#n+3, corresponding TRSs may be transmitted in symbols #6 and #11. Through this, the symbol interval between TRSs may be made the same as the symbol interval between TRSs in NR. Similarly, for SSB#n+4, corresponding TRSs may be transmitted in symbol #2 and symbol #7, for SSB#n+5, corresponding TRSs may be transmitted in symbol #3 and symbol #8, for SSB#n+6, corresponding TRSs may be transmitted in symbol #1 and symbol #6, and for SSB#n+7, corresponding TRSs may be transmitted in symbol #2 and symbol #7. Through this, the symbol interval between TRSs may be made the same as the symbol interval between TRSs in NR.

According to one embodiment, when a TRS is transmitted in a PSS symbol (e.g., symbol #12 for SSB#n+1, symbol #6 for SSB#n+3, symbol #8 for SSB#n+5, or symbol #2 for SSB#n+7), 20 RBs occupied by a PBCH or 12 RBs occupied by a PSS are emptied, and the TRS may be mapped discontinuously on the frequency axis.

According to one embodiment, when a TRS is transmitted in a symbol to which an SSB is not mapped (e.g., symbol #6 for SSB#n, symbol #7 for SSB#n+1, symbol #10 for SSB#n+2, symbol #11 for SSB#n+3, symbol #2 for SSB#n+4, or symbol #3 for SSB#n+5, symbol #6 for SSB#n+6, symbol #7 for SSB#n+7), 20 RBs occupied by a PBCH or 12 RBs occupied by a PSS are emptied, and the TRS may be mapped discontinuously on the frequency axis or continuously without a gap on the frequency axis.

According to one embodiment, when a TRS is transmitted in a PBCH symbol (e.g., symbol #11 for SSB#n, symbol #5 for SSB#n+2, symbol #7 for SSB#n+4, symbol #1 for SSB#n+6), 20 RBs occupied by a PBCH are emptied, and the TRS may be mapped discontinuously on the frequency axis.

- Case F or Case G 1640: For SSB#n, corresponding TRSs may be transmitted in symbols #1 and #5, or symbols #2 and #6, and for SSB#n+1, corresponding TRSs may be transmitted in symbols #8 and #12, or symbols #9 and #13. Through this, the symbol interval between TRSs may be made the same as the symbol interval between TRSs in NR.

According to one embodiment, when a TRS is transmitted in a PSS symbol (e.g., symbol #2 or symbol #9), 20 RBs occupied by a PBCH or 12 RBs occupied by a PSS may be emptied, and the TRS may be mapped discontinuously on the frequency axis.

According to one embodiment, when a TRS is transmitted in a symbol to which the SSB is not mapped (e.g., symbol #1, symbol #6, symbol #8, symbol #13), 20 RBs occupied by a PBCH or 12 RBs occupied by a PSS are emptied, and the TRS may be mapped discontinuously on the frequency axis or continuously without a gap on the frequency axis.

According to one embodiment, when a TRS is transmitted in a PBCH symbol (e.g., symbol #5 or symbol #12), 20 RBs occupied by a PBCH are emptied, and the TRS may be mapped discontinuously on the frequency axis.

According to the proposed ES-DRS of [Example #1-2 of ES-DRS structure], one of two symbols constituting a TRS may be frequency-domain multiplexed (FDM) with one of four symbols constituting an associated SSB, and the other symbol may be time-domain multiplexed (TDM) with the SSB.

In the above-described embodiments, a terminal may treat a TRS constituting an ES-DRS as being in a QCL relationship with an associated SSB that is multiplexed and transmitted. Specifically, a TRS and an SSB, which are associated with each other, may have a QCL relationship in properties like average gain, QCL-Type A, and QCL-Type B.

[Example #2 of ES-DRS structure] A method of modifying an existing SSB structure and configuring an ES-DRS as a combination of downlink/uplink signals

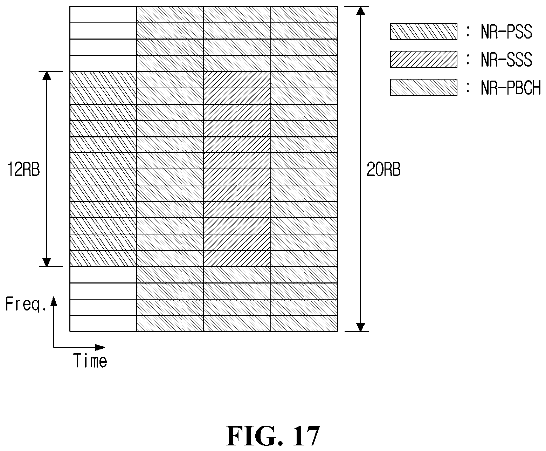

FIG. 17 illustrates a structure of an SSB in a wireless communication system according to an embodiment of the present disclosure. FIG. 17 shows a structure of an SSB, in which a PSS, a PBCH, an SSS, and a PBCH are sequentially placed on a time axis, the PSS and the SSS are an M-sequence and a Gold-sequence respectively with a length of 127 across 12 RBs, and the PBCH are mapped across 20 RBs surrounding the SSS. In case a terminal receives the SSB and performs an initial access procedure, depending on a frequency range (FR) in which the terminal operates, the terminal may search for a sync raster, in which the SSB is transmitted, through an SSB frequency location SSREF corresponding to GSCN and obtain system information. The terminal obtains a symbol timing and a cell ID in a cell group from the PSS and detects the cell group through the SSS. Next, the terminal may know an SSB index and a half frame index (e.g., slot and frame boundary detection) through a DMRS included in the PBCH and decode a master information block (MIB) in the PBCH, thereby obtaining time information (e.g., 80 ms, SFN, SSB index, hyper frame (HF)) and a RMSI CORSET/search space (SS) configuration. Thus, the terminal may perform time/frequency synchronization for a cell to be accessed through a PSS, an SSS and a PBCH.

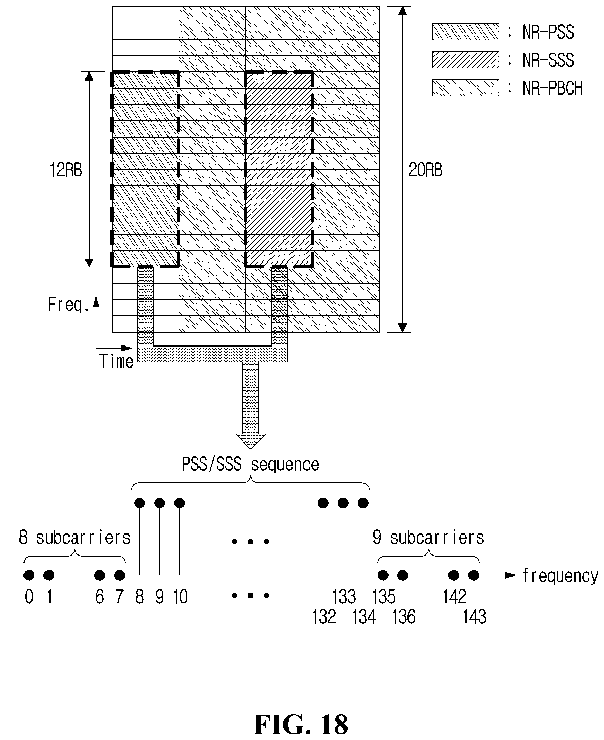

FIG. 18 illustrates examples of guard carriers that are applicable to a synchronization signal in a wireless communication system according to an embodiment of the present disclosure. As shown in FIG. 18, a PSS and an SSS, which consist of a sequence with a length of 127 respectively, use 127 REs included in 12 RBs for PSS and SSS mapping. In the 12 RBs, 17 subcarriers are reserved as guard carriers.

As described above, in a macro P(S)Cell-small SCell CA environment, if a difference between a terminal-to-macro cell distance and a terminal-to-small cell is equal to or greater than approximately 175m, propagation delay may become greater than a 120 kHz SCS CP length (= 586 nsec), which may require a signal for compensating for frame boundary misalignment longer than a cyclic prefix (CP) length between PCell and SCell. Accordingly, in order to obtain fine time/frequency synchronization of SCell, an existing SSB and/or TRS may not be received in SCell but an existing SSB structure may be modified such that an ES-DRS may be configured as a combination of downlink/uplink signals that are maximally condensed on a time axis. Such an ES-DRS may be used for a terminal to obtain time/frequency synchronization.

[Example #2-1 of ES-DRS structure] An ES-DRS may be configured by retaining a PSS/SSS in an SSB and replacing a PBCH symbol by a TRS. That is, the ES-DRS may have a structure of {PSS+TRS+SSS+TRS}. Herein, for the PSS/SSS composed of a 127-legth sequence, if the number of guard tones is set to be smaller than the existing SSB, the PSS/SSS may be mapped to 11 RPBs.

In other words, for a first method of configuring an ES-DRS, it is possible to consider retaining a current structure of a PSS/SSS and replacing a PBCH symbol by a TRS. That is, in the above-described SSB structure, {PSS+TRS+SSS+TRS} may be used instead of {PSS+PBCH+SSS+PBCH} that is a time-axis signal configuration. Herein, for the PSS/SSS composed of a 127-length sequence, if the number of guard tones is reduced as compared to an existing number, the PSS/SSS may be mapped to 11 PRBs. In addition, by considering a frequency synchronization solution aspect of an ES-DRS, a structure with a 4-symbol TRS spacing may be possible in a form such as {beam1 PSS+beam1 TRS+beam1 SSS+beam2 TRS}+{beam2 PSS+beam1 TRS+beam 2 SSS+beam2 TRS}. Herein, beam indexes like beam1 and beam2 may be replaced by an SSB index, or an identical beam index may be configured (e.g., in a QCL relationship).

[Example #2-2 of ES-DRS structure] Similar to RACH, an ES-DRS may be configured by designing an SSB in a form of {CP + sequence + sequence +...}. For example, structures like {CP+SSS+SSS+GP} or {CP+TRS+TRS+GP} or {CP+RACH+RACH+GP} are possible. For example, in some cases, the number of repeated sequences may vary according to a cell radius or a speed of a terminal. Herein, in the case of an SSS with a 127-length sequence, the number of guard tones may be set to 11 PRBs, which is smaller than that of an existing SSB.

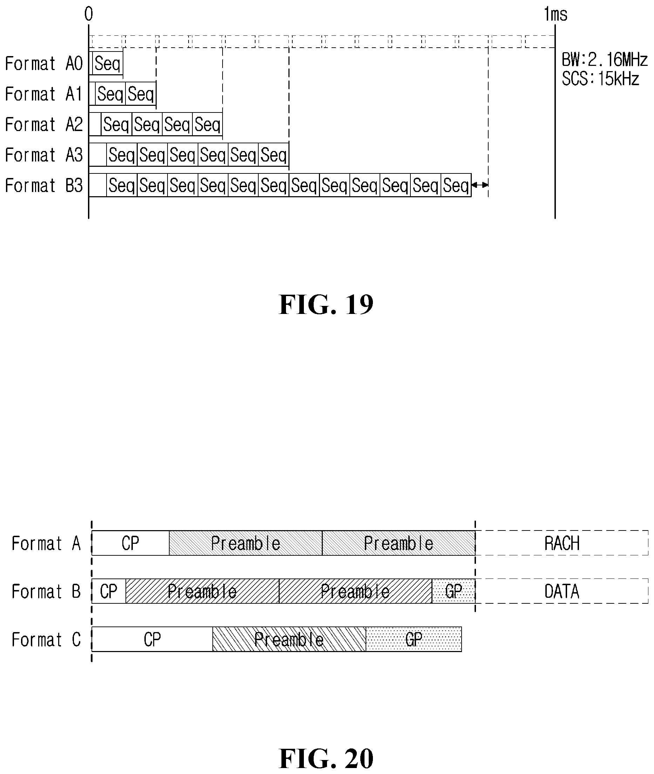

In other words, similar to RACH, it is possible to consider an ES-DRS that is configured in a form of {CP + sequence + sequence +... }. Currently, a PRACH preamble is divided into a long sequence and a short sequence, and a short sequence with a length of 139 has a form of {CP + sequence} or {CP + sequence + sequence +... }, as shown in FIG. 19. FIG. 19 illustrates examples of formats of a synchronous RACH preamble in a wireless communication system according to an embodiment of the present disclosure. In addition, according to formats, as shown in FIG. 20, Format A has a form of {CP + sequence + sequence}, Format B has a form of {CP + sequence + sequence + GP}, and Format C has a form of {CP + sequence + GP}. Various PRACH preamble formats are designed to consider a cell size or a high-speed situation, where a terminal moves fast, and may be selectively used according to environments of the terminal and a cell.

Accordingly, likewise, it is possible to consider a structure of an ES-DRS configured in {CP+SSS+SSS+GP} or {CP+TRS+TRS+GP} or { CP+RACH+RACH+GP}, and it is possible to a different number of repeated sequences according to a size of a cell or a speed of a terminal. In addition, in this case, by using a smaller number of guard tones than an existing case, an SSS may be mapped to 11 PRBs.

[Example #2-3 of ES-DRS structure] An ES-DRS may be configured through a PSS/SSS combination. A structure like {PSS+PSS+SSS+SSS} or {PSS+SSS+SSS+PSS} is possible. Specifically, an ES-DRS may be configured by placing a PSS and/or an SSS instead of a PBH of an SSB. When the above-described [Example #2-1 of ES-DRS structure] has the form of {PSS+TRS+SSS+TRS}, according to the example of this structure, an ES-DRS may be configured in a form of {PSS+PSS+SSS+SSS} or {PSS+SSS+SSS+PSS}. There may be a difference in frequency synchronization between them. For example, in the case of {PSS+SSS+SSS+PSS}, since 1-OFDM symbol and 3-OFDM symbol are distances, a terminal may obtain synchronization with the 1-OFDM symbol distance and then reduce a residual error to the 3-OFDM symbol distance, thereby assisting with frequency synchronization. In consideration of such a structure, simple signaling (e.g., whether NES mode is on/off) is additionally possible through blind detection (BD) of a terminal in {PSS+PSS+SSS+SSS} and {PSS+PSS+SSS+(-)SSS}. Likewise, in the case of the structure of {PSS+SSS+SSS+PSS}, simple signaling (e.g., whether NES mode is on/off) is possible through BD of a terminal in {PSS+SSS+SSS+PSS} and {PSS+SSS+(-)SSS+PSS}.

Meanwhile, when an ES-DRS structure based on the above-described PSS/SSS combination is used, a legacy terminal may erroneously operate due to a newly added PSS/SSS. Accordingly, for the legacy terminal, an alternative structure, in which only one PSS is placed and only an SSS is additionally placed, may be considered. For example, an ES-DRS structure like {PSS+SSS+SSS+SSS} may be considered, and such a structure is expected to have similar performance to [Example #2-1 of ES-DRS structure] with respect to frequency synchronization. Additionally, in this case, simple signaling (e.g., whether NES mode is on/off) is possible through BD of a terminal in {PSS+SSS+SSS+SSS} and {PSS+SSS+SSS+(-)SSS}.

[Example #2-4 of ES-DRS structure] In case an SSS is repeated, a data signal and the SSS may have a differently configured SCS to reduce a time area occupied by 2 symbols. For example, if a data-SCS is 15 kHz, an SSS-SCS may be set to 30 kHz, and thus a 2-symbol area of the SSS may be configured to be identical with a 1-symbol area.

In other words, among the above-described structure examples, when an SSS is repeatedly transmitted, in order to reduce a time area occupied by a 2-symbol, a data-SCS may be set to 15 kHz, and an SSS-SCS may be set to 30 kHz, such that a 2-symbol area of the SSS may be configured to have a same time length as a 1-symbol area. In addition, the necessity of TRS may be different according to each terminal, and even when a terminal requires a TRS, the TRS may not have to be transmitted as frequently as SSB periodicity. Accordingly, like in [Example #2-2 of ES-DRS structure] or [Example #2-3 of ES-DRS], a TRS-less ES-DRS structure may also be used.

[Example #2-5 of ES-DRS structure] An ES-DRS may be configured by multiplexing a TRS in the ES-DRS every K transmissions of an SSB. In other words, it is possible to consider a structure in which a TRS is multiplexed in an ES-DRS every time an SSB is repeatedly transmitted K times. For example, in a structure based on [Example #2-1 of ES-DRS structure], a TRS may be multiplexed every K transmissions of an SSB. Alternatively, on the other hand, the periodicity of a TRS constituting an ES-DRS may be set/transmitted to be shorter than the periodicity of an SSB. However, in case a terminal is implemented by only one oscillator when CA including PCell and SCell is supported, this method may be applied to a situation in which a time/frequency error occurs only at a predetermined level or below PCell.

A wireless communication system according to the present disclosure may support transmission of various ES-DRSs and operations of an associated terminal by using an ES-DRS according to at least one or another structure among the above-exemplified structures. An ES-DRS according to various embodiments may be designed based on an SSB for energy saving of a base station. Specifically, when an SSB including a synchronization signal and a TRS are designed as a single unit, energy consumption for transmitting the SSB and the TRS in a separate procedure, occasion or signal group may be reduced. A specific structure of an ES-DRS applicable to the present disclosure may be defined in various manners including a design of retaining an existing SSB structure as shown in [Example #1 of ES-DRS structure] and a design of modifying an existing SSB structure as shown in [Example #2 of ES-DRS structure]. Hereinafter, various embodiments about the use of ES-DRS will be described. In the description below, 'ES-DRS' may be referred to as 'cell discovery signal', 'discovery signal' or any other terms with an equivalent technical meaning.

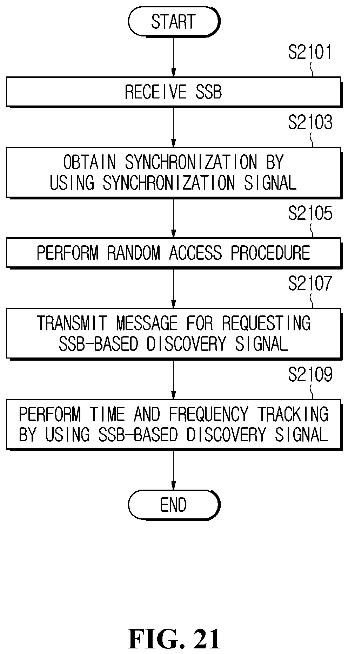

FIG. 21 illustrates an example of a procedure for receiving a discovery signal in a wireless communication system according to an embodiment of the present disclosure. FIG. 21 exemplifies a method for operating a terminal.

Referring to FIG. 21, at step S2101, a terminal receives at least one SSB. The SSB is transmitted from a base station according to a predefined rule, and the terminal may attempt to receive SSBs based on the rule. That is, the terminal may attempt to detect at least one synchronization signal included in an SSB in candidate positions on a frequency axis of the SSB based on a sync raster.

At step S2103, the terminal obtains synchronization by using the synchronization signal. That is, the terminal may obtain time and/or frequency synchronization with the base station by using the synchronization signal included in the received SSB. By receiving the SSB, the terminal may receive an MIB included in a broadcast channel apart from the synchronization signal. Thus, the terminal obtains system information by using the MIB. That is, the terminal may obtain synchronization by using the received SSB and obtain the system information by decoding the MIB that is mapped to the broadcast channel.

At step S2105, the terminal performs a random access procedure. The terminal may further obtain different system information (e.g., SIB) based on the system information that is obtained by using the MIB. In addition, the terminal may identify configuration information related to a random access channel indicated by the different system information and perform the random access procedure based on the identified configuration information. Specifically, the terminal may transmit a RACH preamble, receive a random access response message, and perform signaling for connection establishment.

At step S2107, the terminal transmits a message for requesting an SSB-based discovery signal. In other words, the terminal requests the base station to transmit an ES-DRS including a TRS multiplexed with an SSB or a TRS combined with the SSB. To this end, the terminal may generate a message and/or signal for requesting the discovery signal and transmit the generated message and/or signal. The message and/or signal may include a request for the discovery signal and further include at least one of an additional request for a structure of the discovery signal (e.g., bandwidth, periodicity, density, resolution, structure) and an additional request for a transmission time of the discovery signal (e.g., index, index group) according to various embodiments. Herein, the at least one additional request may be transmitted through an explicit indicator or be indicated by selecting a resource for transmitting the message. The message and/or signal may be generated and transmitted according to a predefined rule or be generated and transmitted based on a configuration of the base station.

At step S2109, the terminal performs time and/or frequency tracking by using the SSB-based discovery signal. According to various embodiments of the present disclosure, an SSB transmitted from the base station may be multiplexed with reference signals. Herein, the reference signals are for time and/or frequency tracking and may be referred to as TRS. Based on a multiplexing scheme, the terminal may determine positions of the reference signals from a position of the SSB and receive the reference signals. By using the reference signals, the terminal may estimate a timing offset, a delay spread, a frequency offset, and a doppler spread.

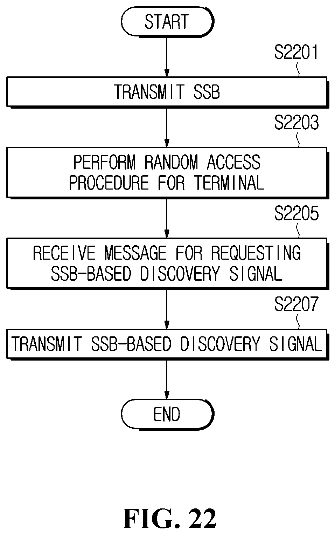

FIG. 22 illustrates an example of a procedure for transmitting a discovery signal in a wireless communication system according to an embodiment of the present disclosure.

Referring to FIG. 22, at step S2201, a base station transmits an SSB. The base station generates and transmits the SSB including at least one synchronization signal and a broadcast channel. Herein, the base station may repeatedly transmit the SSB by using a plurality of Tx beams. A pattern of a resource for transmitting the SSB may be predefined. In addition, the base station may transmit system information (e.g., MIB, SIB). The system information may including information related to a random access channel.

At step S2203, the base station performs a random access procedure for a terminal. Specifically, the base station may perform the random access procedure by receiving a random access preamble through a random access channel indicated by configuration information for the random access channel included in the system information (e.g., SIB), transmitting a random access response, and then performing signaling for connection establishment.

At step S2205, the base station receives a message for requesting an SSB-based discovery signal from the terminal. In other words, the base station receives a request for transmitting an ES-DRS including a TRS multiplexed with an SSB or a TRS combined with the SSB from the terminal. A message and/or signal for requesting a discovery signal includes a request for the discovery signal and may further include a request for a structure of the discovery signal (e.g., bandwidth, periodicity, density, resolution, structure) according to various embodiments. Herein, the message and/or signal may be generated and transmitted according to a predefined rule or be generated and transmitted based on a configuration of the base station.

At step S2207, the base station transmits the SSB-based discovery signal. In response to the request from the terminal, the base station may transmit a discovery signal designed based on an SSB, that is, an ES-DRS. Herein, if a plurality of discovery signal structures are supported, the base station may select at least one structure and then transmit a discovery signal with the selected structure. For example, the base station may accept a structure requested by the terminal or select at least one structure based on a current resource use situation and/or an available energy situation.

Although not illustrated in FIG. 22, before transmitting a discovery signal, the base station may transmit configuration information related to the discovery signal. Thus, the base station may inform the terminal of a configuration of the discovery signal such as a structure and an index, and the terminal may attempt to receive the discovery signal based on the configuration information.

According to the embodiments described with reference to FIG. 21 and FIG. 22, a terminal may request a base station to transmit a discovery signal. In the above-described embodiments, a terminal requests transmission of a discovery signal after a random access procedure. However, according to another embodiment, a terminal may request transmission of a discovery signal before a random access procedure. In this case, the terminal may perform synchronization for the random access procedure by using the discovery signal.

According to various embodiments, a base station may provide a plurality of cells (e.g. Pcell, Scell) to a terminal. Herein, according to an embodiment, the transmission and reception of an SSB and a random access procedure may be performed in Pcell, and the subsequent transmission and reception of a discovery signal may be performed in Scell. That is, the SSB may be used for synchronization in Pcell, and the discovery signal may be used for synchronization in Scell.

Alternatively, according to another embodiment, the transmission and reception of an SSB and a random access procedure and the subsequent transmission and reception of a discovery signal may all be performed in a same cell. In this case, initial synchronization may be performed by using the SSB, and additional synchronization and measurement may be performed by using the discovery signal.

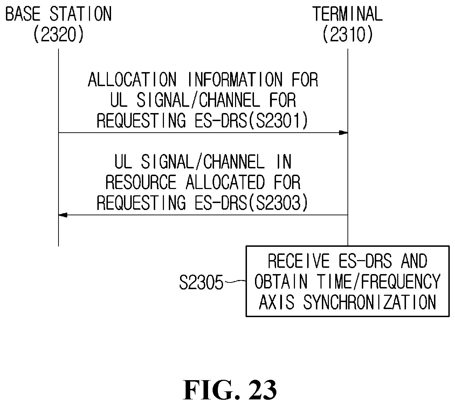

FIG. 23 illustrates an example of a procedure for requesting and transmitting a discovery signal in a wireless communication system according to an embodiment of the present disclosure. FIG. 23 exemplifies signal exchange between a terminal 2310 and a base station 2320.

Referring to FIG. 23, at step S2301, the base station 2320 transmits allocation information for an uplink signal and/or channel for requesting an ES-DRS to the terminal 2310. For example, the base station 2320 may configure a resource of an uplink signal and/or channel, which is defined for an ES-DRS request, for the terminal by using higher layer signaling like RRC signaling. For example, RRC signaling may be dedicated signaling or include system information.

At step S2303, the terminal 2310 transmits an uplink signal and/or channel in a resource allocated for requesting an ES-DRS to the base station 2320. That is, the terminal 2310 may transmit the uplink signal and/or signal configured in the resource allocated for the ES-DRS request.

At step S2305, the terminal 2310 receives the DS-DRS and obtains time and/or frequency axis synchronization. By receiving the ES-DRS, the terminal 2310 may obtain time and/or frequency axis synchronization for a serving cell configured by the base station 2320 and thus perform efficient data transmission and reception. In addition, the base station may save energy through aggregated ES-DRS transmission on time axis.

[Embodiment #1] A method of transmitting an ES-DRS by a base station at a request of a terminal

A base station may not transmit an ES-DRS for a certain serving cell (e.g., P(S)Cell, SCell) but perform a power saving operation. Herein, a terminal may need to receive the ES-DRS for obtaining time axis and/or frequency axis synchronization for the cell. To this end, the base station may define and/or configure a resource of an uplink signal/channel (e.g., SRS, PRACH, PUCCH, scheduling request (SR), etc.) in advance, and the terminal may expect to receive the ES-DRS in the serving cell by transmitting the uplink signal/channel through the resource.

Specifically, in case the terminal operates in an activated SCell, the terminal may receive, from the base station, information related to transmissibility of an ES-DRS in the cell, and an uplink signal/channel capable of requesting the ES-DRS may be allocated. A resource of the uplink signal/channel may be in P(S)Cell (e.g., the SCell or another SCell) where uplink transmission is activated, and which cell is available may be configured and/or indicated from the base station. As an example, a specific RACH occasion (RO), a PRACH preamble index, an SR resource, a PUSCH resource, or a PUCCH resource may be used for an ES-DRS request, and ES-DRS request information may be transmitted as a piggybacking form on a PUSCH.

In addition, resources may be configured according to each index corresponding to the ES-DRS or each group of such indexes. For example, information on an index or an index group may be contained in different ROs, different PRACH preamble indexes, different SR resources, or different PUCCH/PUSCH payloads. Herein, each index may correspond to QCL type-D of the ES-DRS.

In addition, in case a configuration of an ES-DRS is defined in various manners, information on a signal configuration (e.g., in [Example #2 of ES-DRS structure], which combination of PSS/SSS will configure an ES-DRS, or how many times a sequence part will be repeated to configure an ES-DRS) may be determined depending on which information or resource is selected by a terminal among configured resources (e.g., ES-DRS configuration information may be contained in different ROs, different PRACH preamble indexes, different SR resources or PUCCH/PUSCH payloads). In other words, the terminal may transmit a signal for requesting an ES-DRS through a resource corresponding to a configuration of the ES-DRS to be requested.

Furthermore, after an uplink signal/channel for an ES-DRS request of the terminal is transmitted, it may be necessary to define an initial ES-DRS reception time expected by the terminal. If an ES-DRS candidate occasion is defined or configured in advance, an initial ES-DRS candidate occasion after T1 msec or slots following an uplink signal/channel transmission time for the ES-DRS request may be determined as the initial ES-DRS reception time expected by the terminal. Herein, the value of T1 may be defined in advance or set to a specific value by the base station.

[Embodiment #2] A method of determining availability for PDSCH reception of a resource including an ES-DRS burst and a slot format indicator

In case a terminal is scheduled with a PDSCH in a certain serving cell through a CRC-scrambled PDCCH based on a specific RNTI (e.g., C-RNTI), the PDSCH may overlap with an ES-DRS with a specific index. In this case, when the terminal receives the PDSCH, it may be necessary to consider a resource overlapping with the ES-DRS.

To this end, according to an embodiment, a base station may configure and/or indicate that it is performing transmission for a specific ES-DRS index in the serving cell. When receiving the configuration and/or indication, the terminal may determine that a RB area overlapping with an ES-DRS in an OFDM symbol transmitting the ES-DRS makes mapping of a corresponding PDSCH unavailable, that is, a PDSCH scheduled in the serving cell through a CRC-scrambled PDCCH based on a specific RNTI (e.g., C-RNTI). Accordingly, when receiving the PDSCH, the terminal may perform a rate-matching operation for the area overlapping with the ES-DRS. That is, in case information on at least one index of an ES-DRS, which is being transmitted from a base station, and a downlink resource (e.g., PDSCH) with an area at least partially overlapping with a resource occupied by the ES-DRS determined by the at least one index is allocated, the terminal may perform a rate-matching operation at least on the partially overlapping area.

Additionally, when receiving a configuration and/or indication of on-going transmission for a specific ES-DRS index in a corresponding serving cell from the base station, the terminal may not expect an OFDM symbol and/or RB area, in which a corresponding ES-DRS is transmitted, to be configured (e.g., by higher layer signaling using *tdd-UL-DL-ConfigurationCommon* or *tdd-UL-DL-ConfigurationDedicated*) or indicated (e.g., through DCI format 2_0) as uplink. In addition, when receiving a configuration and/or indication of on-going transmission for a specific ES-DRS index in a corresponding serving cell from the base station, the terminal may not transmit PUSCH/PUCCH/PRACH/SRS in an OFDM symbol and/or RB area in which a corresponding ES-DRS is transmitted. That is, the terminal may determine not to perform uplink transmission in the OFDM symbol and/or RB area in which the ES-DRS is transmitted, in other words, to exclude uplink transmission.

[Embodiment #3] A mapping method between an ES-DRS and a RACH occasion (RO) or a PUSCH occasion (PO)

By reusing a rule for SSB-to-RO mapping and/or SSB-to-PO mapping as shown in Table 8, a mapping relationship between an ES-DRS index and a RO and/or PO may be defined. Hereinafter, for convenience of description, a RO will be described, but a same mapping relationship may also be applied to a PO. Table 8 is an excerpt of TS 38.213 v17.3.0 concerning random access preamble.

[Table 8]

---

### 8.1   Random access preamble

Physical random access procedure is triggered upon request of a PRACH transmission by higher layers or by a PDCCH order. A configuration by higher layers for a PRACH transmission includes the following:

- A configuration for PRACH transmission [4, TS 38.211].
- A preamble index, a preamble SCS, $P_{\text{PRACH,target}}$, a corresponding RA-RNTI, and a PRACH resource.

A PRACH is transmitted using the selected PRACH format with transmission power $P_{\text{PRACH},b,f,c}(i)$, as described in clause 7.4, on the indicated PRACH resource.

For Type-1 random access procedure, a UE is provided a number $N$ of SS/PBCH block indexes associated with one PRACH occasion and a number $R$ of contention based preambles per SS/PBCH block index per valid PRACH occasion by *ssb-perRACH-OccasionAndCB-PreamblesPerSSB*.

---

For Type-2 random access procedure with common configuration of PRACH occasions with Type-1 random access procedure, a UE is provided a number $N$ of SS/PBCH block indexes associated with one PRACH occasion by *ssb-perRACH-OccasionAndCB-PreamblesPerSSB* and a number $Q$ of contention based preambles per SS/PBCH block index per valid PRACH occasion by *msgA-CB-PreamblesPerSSB-PerSharedRO*. The PRACH transmission can be on a subset of PRACH occasions associated with a same SS/PBCH block index within an SSB-RO mapping cycle for a UE provided with a PRACH mask index by *msgA-SSB-SharedRO-MaskIndex* according to [11, TS 38.321].

For Type-2 random access procedure with separate configuration of PRACH occasions with Type-1 random access procedure, a UE is provided a number $N$ of SS/PBCH block indexes associated with one PRACH occasion and a number $R$ of contention based preambles per SS/PBCH block index per valid PRACH occasion by *msgA-SSB-PerRACH-OccasionAndCB-PreamblesPerSSB* when provided; otherwise, by *ssb-perRACH-OccasionAndCB-PreamblesPerSSB*.

For a random access procedure associated with a feature combination indicated by *FeatureCombinationPreambles*, a UE is provided a number $N$ of SS/PBCH block indexes associated with one PRACH occasion by *ssb-perRACH-OccasionAndCB-PreamblesPerSSB* or *msgA-SSB-PerRACH-OccasionAndCB-PreamblesPerSSB* when provided and a number $S$ of contention based preambles per SS/PBCH block index per valid PRACH occasion by *startPreambleForThisPartition* and *numberOfPreamblesPerSSB-ForThisPartition*. The PRACH transmission can be on a subset of PRACH occasions associated with a same SS/PBCH block index within an SSB-RO mapping cycle for a UE provided with a PRACH mask index by *ssb-SharedRO-MaskIndex* according to [11, TS 38.321].

For Type-1 random access procedure, or for Type-2 random access procedure with separate configuration of PRACH occasions from Type 1 random access procedure, if $N < 1$, one SS/PBCH block index is mapped to $1/N$ consecutive valid PRACH occasions and $R$ contention based preambles with consecutive indexes associated with the SS/PBCH block index per valid PRACH occasion start from preamble index 0. If $N \geq 1$, $R$ contention based preambles with consecutive indexes associated with SS/PBCH block index $n$, $0 \leq n \leq N - 1$, per valid PRACH occasion start from preamble index $n \cdot N_{\text{preamble}}^{\text{total}}/N$ where $N_{\text{preamble}}^{\text{total}}$ is provided by *totalNumberOfRA-Preambles* for Type-1 random access procedure, or by *msgA-TotalNumberOfRA-Preambles* for Type-2 random access procedure with separate configuration of PRACH occasions from a Type 1 random access procedure, and is an integer multiple of $N$.

For Type-2 random access procedure with common configuration of PRACH occasions with Type-1 random access procedure, if $N < 1$, one SS/PBCH block index is mapped to $1/N$ consecutive valid PRACH occasions and $Q$ contention based preambles with consecutive indexes associated with the SS/PBCH block index per valid PRACH occasion start from preamble index $R$. If $N \geq 1$, $Q$ contention based preambles with consecutive indexes associated with SS/PBCH block index $n$, $0 \leq n \leq N - 1$, per valid PRACH occasion start from preamble index $n \cdot N_{\text{preamble}}^{\text{total}}/N + R$, where $N_{\text{preamble}}^{\text{total}}$ is provided by *totalNumberOfRA-Preambles* for Type-1 random access procedure.

For link recovery, a UE is provided $N$ SS/PBCH block indexes associated with one PRACH occasion by *ssb-perRACH-Occasion* in *BeamFailureRecoveryConfig*. For a

dedicated RACH configuration provided by *RACH-ConfigDedicated*, if *cfra* is provided, a UE is provided $N$ SS/PBCH block indexes associated with one PRACH occasion by *ssb-perRACH-Occasion* in *occasions*. If $N < 1$, one SS/PBCH block index is mapped to $1/N$ consecutive valid PRACH occasions. If $N \geq 1$, all consecutive $N$ SS/PBCH block indexes are associated with one PRACH occasion. SS/PBCH block indexes provided by *ssb-PositionsInBurst* in *SIB1* or in *ServingCellConfigCommon* are mapped to valid PRACH occasions in the following order where the parameters are described in [4, TS 38.211].

- First, in increasing order of preamble indexes within a single PRACH occasion
- Second, in increasing order of frequency resource indexes for frequency multiplexed PRACH occasions
- Third, in increasing order of time resource indexes for time multiplexed PRACH occasions within a PRACH slot
- Fourth, in increasing order of indexes for PRACH slots

An association period, starting from frame 0, for mapping SS/PBCH block indexes to PRACH occasions is the smallest value in the set determined by the PRACH configuration period according Table 8.1-1 such that $N_{Tx}^{SSB}$ SS/PBCH block indexes are mapped at least once to the PRACH occasions within the association period, where a UE obtains $N_{Tx}^{SSB}$ from the value of *ssb-PositionsInBurst* in *SIB1* or in *ServingCellConfigCommon*. If after an integer number of SS/PBCH block indexes to PRACH occasions mapping cycles within the association period there is a set of PRACH occasions or PRACH preambles that are not mapped to $N_{Tx}^{SSB}$ SS/PBCH block indexes, no SS/PBCH block indexes are mapped to the set of PRACH occasions or PRACH preambles. An association pattern period includes one or more association periods and is determined so that a pattern between PRACH occasions and SS/PBCH block indexes repeats at most every 160 msec. PRACH occasions not associated with SS/PBCH block indexes after an integer number of association periods, if any, are not used for PRACH transmissions.

For a PRACH transmission by a UE triggered by a PDCCH order, the PRACH mask index field [5, TS 38.212], if the value of the random access preamble index field is not zero, indicates the PRACH occasion for the PRACH transmission where the PRACH occasions are associated with the SS/PBCH block index indicated by the SS/PBCH block index field of the PDCCH order. If the UE is provided $K_{cell,offset}$ by *CellSpecific_Koffset*, the PRACH occasion is after slot $n + 2^{\mu} \cdot K_{cell,offset}$ where $n$ is the slot of the UL BWP for the PRACH transmission that overlaps with the end of the PDCCH order reception assuming $T_{TA} = 0$, and $\mu$ is the SCS configuration for the PRACH transmission. If the PDCCH reception for the PDCCH order includes two PDCCH candidates from two linked search space sets based on *searchSpaceLinkingId*, as described in clause 10.1, the last symbol of the PDCCH reception is the last symbol of the PDCCH candidate that ends later. The PDCCH reception includes the two PDCCH candidates also when the UE is not required to monitor one of the two PDCCH candidates as described in clauses 10 (except clause 10.4), 11.1, and 11.1.1.

For a PRACH transmission triggered by higher layers, if *ssb-ResourceList* is provided, the PRACH mask index is indicated by *ra-ssb-OccasionMaskIndex* which indicates the PRACH occasions for the PRACH transmission where the PRACH occasions are associated with the selected SS/PBCH block index.

The PRACH occasions are mapped consecutively per corresponding SS/PBCH block index. The indexing of the PRACH occasion indicated by the mask index value is

reset per mapping cycle of consecutive PRACH occasions per SS/PBCH block index. The UE selects for a PRACH transmission the PRACH occasion indicated by PRACH mask index value for the indicated SS/PBCH block index in the first available mapping cycle.

For the indicated preamble index, the ordering of the PRACH occasions is
- First, in increasing order of frequency resource indexes for frequency multiplexed PRACH occasions
- Second, in increasing order of time resource indexes for time multiplexed PRACH occasions within a PRACH slot
- Third, in increasing order of indexes for PRACH slots

For a PRACH transmission triggered upon request by higher layers, a value of *ra-OccasionList* [12, TS 38.331], if *csirs-ResourceList* is provided, indicates a list of PRACH occasions for the PRACH transmission where the PRACH occasions are associated with the selected CSI-RS index indicated by *csi-RS*. The indexing of the PRACH occasions indicated by *ra-OccasionList* is reset per association pattern period.

## Table 8.1-1: Mapping between PRACH configuration period and SS/PBCH block to PRACH occasion association period

| PRACH configuration period (msec) | Association period (number of PRACH configuration periods) |
|---|---|
| 10 | {1, 2, 4, 8, 16} |
| 20 | {1, 2, 4, 8} |
| 40 | {1, 2, 4} |
| 80 | {1, 2} |
| 160 | {1} |

For paired spectrum or supplementary uplink band all PRACH occasions are valid. For unpaired spectrum,
- if a UE is not provided *tdd-UL-DL-ConfigurationCommon*, a PRACH occasion in a PRACH slot is valid if it does not precede a SS/PBCH block in the PRACH slot and starts at least $N_{gap}$ symbols after a last SS/PBCH block reception symbol, where $N_{gap}$ is provided in Table 8.1-2 and, if *channelAccessMode = "semiStatic"* is provided, does not overlap with a set of consecutive symbols before the start of a next channel occupancy time where the UE does not transmit [15, TS 37.213].
   -    the candidate SS/PBCH block index of the SS/PBCH block corresponds to the SS/PBCH block index provided by *ssb-PositionsInBurst* in *SIB1* or in *ServingCellConfigCommon* , as described in clause 4.1
- If a UE is provided *tdd-UL-DL-ConfigurationCommon*, a PRACH occasion in a PRACH slot is valid if
   -    it is within UL symbols, or
   -    it does not precede a SS/PBCH block in the PRACH slot and starts at least $N_{gap}$ symbols after a last downlink symbol and at least $N_{gap}$ symbols after a last SS/PBCH block symbol, where $N_{gap}$ is provided in Table 8.1-2, and if *channelAccessMode = "semiStatic"* is provided, does not overlap with a set of consecutive symbols before the start of a next channel occupancy time where there shall not be any transmissions, as described in [15, TS 37.213]

- the candidate SS/PBCH block index of the SS/PBCH block corresponds to the SS/PBCH block index provided by *ssb-PositionsInBurst* in *SIB1* or in *ServingCellConfigCommon*, as described in clause 4.1.

For preamble format B4 [4, TS 38.211], $N_{gap} = 0$.

**Table 8.1-2: $N_{gap}$ values for different preamble SCS $\mu$**

| Preamble SCS | $N_{gap}$ |
|---|---|
| 1.25 kHz or 5 kHz | 0 |
| 15 kHz or 30 kHz or 60 kHz or 120 kHz | 2 |
| 480 kHz | 8 |
| 960 kHz | 16 |

If a random access procedure is initiated by a PDCCH order, the UE, if requested by higher layers, transmits a PRACH in the selected PRACH occasion, as described in [11, TS 38.321], for which a time between the last symbol of the PDCCH order reception and the first symbol of the PRACH transmission is larger than or equal to $N_{T,2} + \Delta_{BWPSwitching} + \Delta_{Delay} + T_{switch}$ msec, where

- $N_{T,2}$ is a time duration of $N_2$ symbols corresponding to a PUSCH preparation time for UE processing capability 1 [6, TS 38.214] assuming $\mu$ corresponds to the smallest SCS configuration between the SCS configuration of the PDCCH order and the SCS configuration of the corresponding PRACH transmission
- $\Delta_{BWPSwitching} = 0$ if the active UL BWP does not change and $\Delta_{BWPSwitching}$ is defined in [10, TS 38.133] otherwise
- $\Delta_{Delay} = 0.5$ msec for FR1 and $\Delta_{Delay} = 0.25$ msec for FR2
- $T_{switch}$ is a switching gap duration as defined in [6, TS 38.214]

For a PRACH transmission using 1.25 kHz or 5 kHz SCS, the UE determines $N_2$ assuming SCS configuration $\mu = 0$.

For single cell operation or for operation with carrier aggregation in a same frequency band, a UE does not transmit PRACH and PUSCH/PUCCH/SRS in a same slot or when a gap between the first or last symbol of a PRACH transmission in a first slot is separated by less than $N$ symbols from the last or first symbol, respectively, of a PUSCH/PUCCH/SRS transmission in a second slot where $N = 2$ for $\mu = 0$ or $\mu = 1$, $N = 4$ for $\mu = 2$ or $\mu = 3$, $N = 16$ for $\mu = 5$, $N = 32$ for $\mu = 6$, and $\mu$ is the SCS configuration for the active UL BWP. For a PUSCH transmission with repetition Type B, this applies to each actual repetition for PUSCH transmission [6, TS 38.214].

### 8.1A    PUSCH for Type-2 random access procedure

For a Type-2 random access procedure, a UE transmits a PUSCH, when applicable, after transmitting a PRACH. The UE encodes a transport block provided for the PUSCH transmission using redundancy version number 0. The PUSCH transmission is after the PRACH transmission by at least $N$ symbols where $N = 2$ for $\mu = 0$ or $\mu = 1$, $N = 4$ for $\mu = 2$ or $\mu = 3$, $N = 16$ for $\mu = 5$, $N = 32$ for $\mu = 6$, and $\mu$ is the SCS configuration for the active UL BWP.

A UE does not transmit a PUSCH in a PUSCH occasion if the PUSCH occasion associated with a DMRS resource is not mapped to a preamble of valid PRACH occasions or if the associated PRACH preamble is not transmitted as described in clause 7.5 or clause 11.1. A UE can transmit a PRACH preamble in a valid PRACH occasion if the PRACH preamble is not mapped to a valid PUSCH occasion.

A mapping between one or multiple PRACH preambles and a PUSCH occasion associated with a DMRS resource is per PUSCH configuration.

A UE determines time resources and frequency resources for PUSCH occasions in an active UL BWP from *msgA-PUSCH-Config* or *separateMsgA-PUSCH-Config* for the active UL BWP. If the active UL BWP is not the initial UL BWP and *msgA-PUSCH-Config* or *separateMsgA-PUSCH-Config* is not provided for the active UL BWP, the UE uses the *msgA-PUSCH-Config* or *separateMsgA-PUSCH-Config* provided for the initial UL BWP.

A UE determines a first interlace or first RB for a first PUSCH occasion in an active UL BWP respectively from *interlaceIndexFirstPO-MsgA-PUSCH* or from *frequencyStartMsgA-PUSCH* that provides an offset, in number of RBs in the active UL BWP, from a first RB of the active UL BWP. A PUSCH occasion includes a number of interlaces or a number of RBs provided by *nrofInterlacesPerMsgA-PO* or by *nrofPRBs-perMsgA-PO*, respectively. Consecutive PUSCH occasions in the frequency domain of an UL BWP are separated by a number of RBs provided by *guardBandMsgA-PUSCH*. A number $N_f$ of PUSCH occasions in the frequency domain of an UL BWP is provided by *nrofMsgA-PO-FDM*.

For operation with shared spectrum channel access, if the PUSCH occasion is provided by higher layer parameters *frequencyStartMsgA-PUSCH* and *nrofPRBs-perMsgA-PO*, the UE expects a PUSCH occasion to be confined within the same RB set as the corresponding PRACH transmission.

For operation with shared spectrum channel access, if the PUSCH occasion is provided by higher layer parameters *interlaceIndexFirstPO-MsgA-PUSCH* and *nrofInterlacesPerMsgA-PO*, the RB set for the PUSCH occasion in the active UL BWP is the same RB set as the corresponding PRACH transmission. The UE assumes that the RB set is defined as when the UE is not provided *intraCellGuardBandsPerSCS* for an UL carrier as described in clause 7 of [6, TS 38.214].

If a UE does not have dedicated RRC configuration, or has an initial UL BWP as an active UL BWP, or is not provided *startSymbolAndLengthMsgA-PO*, *msgA-PUSCH-timeDomainAllocation* provides a SLIV and a PUSCH mapping type for a PUSCH transmission by indicating

- one of the first *maxNrofUL-Allocations* values from *PUSCH-TimeDomainResourceAllocationList*, if *PUSCH-TimeDomainResourceAllocationList* is provided in *PUSCH-ConfigCommon*
- one of the entries from table 6.1.2.1.1-2 or table 6.1.2.1.1-3 in [6, TS 38.214], if *PUSCH-TimeDomainResourceAllocationList* is not provided in *PUSCH-ConfigCommon*

else, the UE is provided a SLIV by *startSymbolAndLengthMsgA-PO*, and a PUSCH mapping type by *mappingTypeMsgA-PUSCH* for a PUSCH transmission.

For mapping one or multiple preambles of a PRACH slot to a PUSCH occasion associated with a DMRS resource, a UE determines a first slot for a first PUSCH occasion in an active UL BWP from *msgA-PUSCH-TimeDomainOffset* that provides an offset, in number of slots in the active UL BWP, relative to the start of a PUSCH slot including the start of each PRACH slot. The UE does not expect to have a PRACH preamble transmission and a PUSCH transmission with a msgA in a PRACH slot or in a PUSCH slot, or to have overlapping msgA PUSCH occasions for a MsgA PUSCH configuration. The UE expects that a first PUSCH occasion in each slot has a same SLIV for a PUSCH transmission that is provided by

*startSymbolAndLengthMsgA-PO* or *msgA-PUSCH-timeDomainAllocation* [6, TS 38.214].

Consecutive PUSCH occasions within each slot are separated by *guardPeriodMsgA-PUSCH* symbols and have same duration. A number $N_t$ of time domain PUSCH occasions in each slot is provided by *nrofMsgA-PO-perSlot* and a number $N_s$ of consecutive slots that include PUSCH occasions is provided by *nrofSlotsMsgA-PUSCH*.

A UE is provided a DMRS configuration for a PUSCH transmission in a PUSCH occasion in an active UL BWP by *msgA-DMRS-Config*.

A UE is provided an MCS for data information in a PUSCH transmission for a PUSCH occasion by *msgA-MCS*.

For a PUSCH transmission with frequency hopping in a slot, when indicated by *msgA-intraSlotFrequencyHopping* for the active UL BWP, the frequency offset for the second hop [6, TS 38.214] is determined as described in clause 8.3, Table 8.3-1 using *msgA-HoppingBits instead of* $N_{\text{UL,hop}}$. If *guardPeriodMsgA-PUSCH* is provided, a first symbol of the second hop is separated by *guardPeriodMsgA-PUSCH* symbols from the end of a last symbol of the first hop; otherwise, there is no time separation of the PUSCH transmission before and after frequency hopping. If a UE is provided with *useInterlacePUCCH-PUSCH* in *BWP-UplinkCommon*, the UE shall transmit PUSCH without frequency hopping. A PUSCH transmission uses a same spatial filter as an associated PRACH transmission.

A UE determines whether or not to apply transform precoding for a PUSCH transmission as described in [6, TS 38.214].

A PUSCH occasion for PUSCH transmission is defined by a frequency resource and a time resource, and is associated with a DMRS resource. The DMRS resources are provided by *msgA-DMRS-Config*.

Each consecutive number of $N_{\text{preamble}}$ preamble indexes from valid PRACH occasions in a PRACH slot

 - first, in increasing order of preamble indexes within a single PRACH occasion

 - second, in increasing order of frequency resource indexes for frequency multiplexed PRACH occasions

 - third, in increasing order of time resource indexes for time multiplexed PRACH occasions within a PRACH slot

are mapped to a valid PUSCH occasion and the associated DMRS resource

 - first, in increasing order of frequency resource indexes $f_{id}$ for frequency multiplexed PUSCH occasions

 - second, in increasing order of DMRS resource indexes within a PUSCH occasion, where a DMRS resource index $DMRS_{id}$ is determined first in an ascending order of a DMRS port index and second in an ascending order of a DMRS sequence index [4, TS 38.211]

 - third, in increasing order of time resource indexes $t_{id}$ for time multiplexed PUSCH occasions within a PUSCH slot

 - fourth, in increasing order of indexes for $N_s$ PUSCH slots

where $N_{\text{preamble}} = ceil(T_{\text{preamble}}/T_{\text{PUSCH}})$, $T_{\text{preamble}}$ is a total number of valid PRACH occasions per association pattern period multiplied by the number of preambles per valid PRACH occasion provided by *rach-ConfigCommonTwoStepRA*, and $T_{\text{PUSCH}}$ is a total number of valid PUSCH occasions per PUSCH configuration per association pattern period multiplied by the number of DMRS resource indexes per valid PUSCH occasion provided by *msgA-DMRS-Config*.

> A PUSCH occasion is valid if it does not overlap in time and frequency with any valid PRACH occasion associated with either a Type-1 random access procedure or a Type-2 random access procedure. Additionally, for unpaired spectrum and for SS/PBCH blocks with indexes provided by *ssb-PositionsInBurst* in *SIB1* or by *ServingCellConfigCommon*
>
>     - if a UE is not provided *tdd-UL-DL-ConfigurationCommon*, a PUSCH occasion is valid if the PUSCH occasion
>
>         -     does not precede a SS/PBCH block in the PUSCH slot, and
>
>         -     starts at least $N_{gap}$ symbols after a last SS/PBCH block symbol, where $N_{gap}$ is provided in Table 8.1-2 and, if *channelAccessMode* = "*semiStatic*" is provided, does not overlap with a set of consecutive symbols before the start of a next channel occupancy time where the UE does not transmit [15, TS 37.213].
>
>     - if a UE is provided *tdd-UL-DL-ConfigurationCommon*, a PUSCH occasion is valid if the PUSCH occasion
>
>         -     is within UL symbols, or
>
>         -     does not precede a SS/PBCH block in the PUSCH slot, and
>
>         -     starts at least $N_{gap}$ symbols after a last downlink symbol and at least $N_{gap}$ symbols after a last SS/PBCH block symbol, where $N_{gap}$ is provided in Table 8.1-2 and, if *channelAccessMode* = "*semiStatic*" is provided, does not overlap with a set of consecutive symbols before the start of a next channel occupancy time where the UE does not transmit [15, TS 37.213].

As in [Embodiment#1], whether or not a specific ES-DRS index is transmitted may change over time based on a request of a terminal or a determination of a base station. When an ES-DRS index corresponding to a specific RO varies all the time due to such change, the terminal may be subject to ambiguity regarding which ES-DRS index corresponds to the RO. In order to reduce such ambiguity, it may be desirable to minimize a change in mapping relationship between a RO and a corresponding ES-DRS index, even if there is a change in an ES-DRS index that is being transmission.

For example, in case RO mapping is performed initially based on ES-DRS indexes 0/2/5, an ES-DRS index 1 may be additionally transmitted. In this case, the ES-DRS indexes may not be rearranged into 0/1/2/5 to perform RO mapping, but the ES-DRS index 1, which has started being transmitted, may be placed at the end, and thus RO mapping may be performed in the order of 0/2/5/1. That is, a base station and a terminal may determine mapping between ES-DRSs and ROs such that a RO corresponding to an added ES-DRS index is not placed in the middle of RO(s) of currently transmitted ES-DRS index(es) but is placed to succeed them at the end. This method may be advantageous in reducing ambiguity.

Similarly, for example, there may occur a situation where PO mapping is performed initially based on ES-DRS indexes 0/2/5 and then an ES-DRS index 1 is additionally transmitted. In this case, the ES-DRS indexes may not be rearranged into 0/1/2/5 to perform PO mapping, but the ES-DRS index 1, which has started being transmitted, may be placed at the end, and thus PO mapping may be performed in the order of 0/2/5/1. That is, a base station and a terminal may determine mapping between ES-DRSs and POs such that a PO corresponding to an added ES-DRS index is not placed in the middle of PO(s) of currently transmitted ES-DRS index(es) but is placed to succeed them at the end. This method may be advantageous in reducing ambiguity.

As another example, it may be defined that the number of ES-DRS indexes between a terminal and a base station is limited to a maximum of 4, and RO mapping may be performed first for ES-DRS indexes X/Y/Z/W. Herein, X, Y, Z and W are virtual ES-DRS indexes. If the terminal perceives that ES-DRS indexes 0/4 are being transmitted, X and Y may be set to 0 and 4 respectively (X=0, Y=4), and the terminal may consider a RO corresponding to the ES-DRS indexes Z/W to be invalid. Next, in case the terminal perceives that an ES-DRS index 3 is being transmitted, the ES-DRS index Z may be set to 3 (Z=3), and the terminal may consider a RO corresponding to the ES-DRS index W to be invalid. Next, in case the terminal perceives that transmission of the ES-DRS index 0 is suspended, the terminal may consider a RO corresponding to the ES-DRS indexes X/W to be invalid.

Similarly, it may be defined that the number of ES-DRS indexes between a terminal and a base station is limited to a maximum of 4, and PO mapping may be performed first for ES-DRS indexes X/Y/Z/W. Herein, X, Y, Z and W are virtual ES-DRS indexes. If the terminal perceives that ES-DRS indexes 0/4 are being transmitted, X and Y may be set to 0 and 4 respectively (X=0, Y=4), and the terminal may consider a PO corresponding to the ES-DRS indexes Z/W to be invalid.

Next, in case the terminal perceives that an ES-DRS index 3 is being transmitted, the ES-DRS index Z may be set to 3 (Z=3), and the terminal may consider a PO corresponding to the ES-DRS index W to be invalid. Next, in case the terminal perceives that transmission of the ES-DRS index 0 is suspended, the terminal may consider a PO corresponding to the ES-DRS indexes X/W to be invalid.

[Embodiment #4] A method of transmitting/receiving an ES-DRS in an unlicensed band

As shown in Table 9, SSB transmission and reception in an unlicensed band operation and/or an operation with shared spectrum channel access are defined. If a serving cell, in which an ES-DRS is transmitted, is operated based on an unlicensed band operation, a transmission window, in which the ES-DRS may be transmitted, may be defined, and a plurality of transmission occasions need to be provided in the window. Table 9 is an excerpt of TS 38.213 v17.3.0 describing an unlicensed band operation and/or an operation with shared spectrum channel access.

[Table 9]

For operation with shared spectrum channel access, a UE assumes that transmission of SS/PBCH blocks in a half frame is within a discovery burst transmission window that starts from the first symbol of the first slot in a half-frame. The UE can be provided per serving cell by *discoveryBurstWindowLength* a duration of the discovery burst transmission window. If *discoveryBurstWindowLength* is not provided, the UE assumes that the duration of the discovery burst transmission window is a half frame. For a serving cell, the UE assumes that a periodicity of the discovery burst transmission window is same as a periodicity of half frames for receptions of SS/PBCH blocks in the serving cell. The UE assumes that one or more SS/PBCH blocks indicated by *ssb-PositionsInBurst* may be transmitted within the discovery burst transmission window and have candidate SS/PBCH blocks indexes corresponding to SS/PBCH block indexes provided by *ssb-PositionsInBurst*. If MSB $k$, $k \geq 1$, of *ssb-PositionsInBurst* is set to 1, the UE assumes that SS/PBCH block(s) within the discovery burst transmission window with candidate SS/PBCH block index(es) corresponding to SS/PBCH block index equal to $k - 1$ may be transmitted; if MSB $k$ is set to 0, the UE assumes that the SS/PBCH block(s) are not transmitted. If MSB $k$, $k \geq 1$, of *inOneGroup* is set to 1, and MSB $m$, $m \geq 1$, of *groupPresence* is set to 1, the UE assumes that SS/PBCH block(s) within the discovery burst transmission window with candidate SS/PBCH block index(es) corresponding to SS/PBCH block index determined by $k$ and $m$ may be transmitted; otherwise, the UE assumes that the SS/PBCH block(s) are not transmitted.

For operation with shared spectrum channel access in FR1, a UE assumes that SS/PBCH blocks in a serving cell that are within a same discovery burst transmission window or across discovery burst transmission windows are quasi co-located with respect to average gain, quasi co-location 'typeA' and 'typeD' properties, when applicable [6, TS 38.214], if a value of $\left(N_{DM-RS}^{PBCH} \bmod N_{SSB}^{QCL}\right)$ is same among the SS/PBCH blocks. $N_{DM-RS}^{PBCH}$ is an index of a DM-RS sequence transmitted in a PBCH of a corresponding SS/PBCH block, and $N_{SSB}^{QCL}$ is either provided by *ssb-PositionQCL* or, if *ssb-PositionQCL* is not provided, obtained from a *MIB* provided by a SS/PBCH block according to Table 4.1-1 with $k_{SSB} < 24$ [4, TS 38.211]. The UE can determine an SS/PBCH block index according to $\left(N_{DM-RS}^{PBCH} \bmod N_{SSB}^{QCL}\right)$, or according to $\left(\bar{\iota} \bmod N_{SSB}^{QCL}\right)$ where $\bar{\iota}$ is the candidate SS/PBCH block index. The UE assumes that within a discovery burst transmission window, a number of transmitted SS/PBCH blocks on a serving cell is not larger than $N_{SSB}^{QCL}$ and a number of transmitted SS/PBCH blocks with a same SS/PBCH block index is not larger than one.

**Table 4.1-1: Mapping between the combination of** *subCarrierSpacingCommon* **and LSB of** *ssb-SubcarrierOffset* **to** $N_{SSB}^{QCL}$ **for operation with shared spectrum channel access in FR1**

| *subCarrierSpacing Common* | LSB of *ssb-SubcarrierOffset* | $N_{SSB}^{QCL}$ |
|---|---|---|
| scs15or60 | 0 | 1 |
| scs15or60 | 1 | 2 |
| scs30or120 | 0 | 4 |
| scs30or120 | 1 | 8 |

For operation with shared spectrum channel access in FR2-2, a UE assumes that SS/PBCH blocks in a serving cell that are within a same discovery burst transmission window or across discovery burst transmission windows are quasi co-located with respect to average

gain, quasi co-location 'typeA' and 'typeD' properties, when applicable, if a value of $\left(\bar{\iota} \bmod N_{SSB}^{QCL}\right)$ is same among the SS/PBCH blocks, where $\bar{\iota}$ is the candidate SS/PBCH block index. $N_{SSB}^{QCL}$ is either provided by *ssb-PositionQCL* or, if *ssb-PositionQCL* is not provided, obtained from a *MIB* provided by a SS/PBCH block according to Table 4.1-2. The UE can determine an SS/PBCH block index according to $\left(\bar{\iota} \bmod N_{SSB}^{QCL}\right)$. The UE assumes that within a discovery burst transmission window, a number of transmitted SS/PBCH blocks on a serving cell is not larger than $N_{SSB}^{QCL}$ and a number of transmitted SS/PBCH blocks with a same SS/PBCH block index is not larger than one.

**Table 4.1-2: Mapping between *subCarrierSpacingCommon* to $N_{SSB}^{QCL}$ for operation with shared spectrum channel access in FR2-2**

| *subCarrierSpacingCommon* | $N_{SSB}^{QCL}$ |
|---|---|
| scs15or60 | 32 |
| scs30or120 | 64 |

For operation without shared spectrum channel access in FR2-2, a UE expects a MIB in a SS/PBCH block to provide *subCarrierSpacingCommon* = 'scs30or120'.

Specifically, ES-DRS candidate indexes, which may be transmitted within a transmission window for ES-DRS, may be determined. For example, a candidate index may be determined based on a combination of a sequence and/or payload of symbols constituting an ES-DRS. In addition, similar to $N_{SSB}^{QCL}$ parameter, it may be configured how many ES-DRS candidate index(es) spacings satisfy a QCL relationship. In the present disclosure, an ES-DRS candidate index(es) spacing satisfying a QCL relationship is referred to as N_QCL. A terminal may perceive that ES-DSR candidate indexes having a same result of modulo operation with N_QCL are in a QCL relationship and correspond to a same ES-DRS index.

In addition, in case a plurality of ES-DRS candidate indexes correspond to one ES-DRS index, the proposed method of [Embodiment #2] may be commonly applied to all of a plurality of ES-DRS candidate indexes corresponding to a specific ES-DRS index.

[Embodiment #5] A method of providing a configuration with various functions through an ES-DRS

An ES-DRS or an index of the ES-DRS may be configured in a terminal for a purpose described below. For example, functions configured according to this embodiment may include at least a portion of functions that can be configured in an existing SSB/CSI-RS. At least one of the following configurations may be applied to a terminal capable of receiving an ES-DRS.

- L1 (e.g., L1-RSRP/SINR) or L3 RRM/RSRP/RSRQ measurement
- CSI measurement
- Beam failure detection (BFD)
- Candidate beam detection (CBD)
- QCL source RS of TCI state
- RS interworking with SpatialRelationInfo configuration for uplink channel/signal
- Configuration of ES-DRS index instead of CSI-RS for fast SCell activation as shown in Table 10
- Configuration of reception of ES-DRS instead of TRS in idle/inactive terminal. For example, an ES-DRS reception resource may be allocated to corresponding terminals through a broadcast channel.

At least one of the above-described items may be indicated by at least one of a location of a resource to which an ES-DRS is mapped, an index of the ES-DRS, a sequence value of a signal included in the ES-DRS, and a structure of the ES-DRS. Table 10 is an excerpt of TS 38.214 v17.3.0 concerning aperiodic C

[Table 10]

| 5.2.1.5.3 Aperiodic CSI-RS for tracking for fast SCell activation |
|---|

(continued)

| |
|---|
| When the UE receives an *Enhanced Scell Activation/Deactivation* MAC-CE that triggers one or two CSI-RS bursts for fast SCell activation for a (set of) deactivated SCell(s),<br><br>- if the MAC-CE indicates that the first CSI-RS burst for SCell activation is present in an SCell, then the UE may assume that the first CSI-RS burst for SCell activation is present in that SCell. The first slot of the first CSI-RS burst starts at the $m_1$th SCell slot after the last SCell slot coinciding with the reference slot $n+k$, as defined in clause 4.3 of [6, TS38.213].<br><br>- if the MAC-CE indicates that the second CSI-RS burst for SCell activation is present in an SCell, then the UE may assume that the second CSI-RS burst for SCell activation is present in that SCell. The first slot of the second CSI-RS burst starts at the $m_2$th SCell slot after the end of the first CSI-RS burst. The CSI-RS of the second burst shall have the same antenna port index, OFDM symbol allocations in a slot, same PRB allocation location as the CSI-RS of the first burst.<br><br>- where the CSI-RS burst is defined as four CSI-RS resources in two consecutive slots in clause 5.1.6.1.1.1, and $m_1$ and $m_2$ are provided by *aperiodicTriggeringOffsetL2* in *NZP-CSI-RS-ResourceSet* and *gapBetweenBursts,* respectively, associated with the CSI-RS burst(s) triggered by the MAC-CE. |

As shown in the various embodiment described above, it is possible to use an ES-DRS that is a set of signals transmitted from a base station to obtain time/frequency synchronization of a serving cell. The present disclosure has proposed a procedure of requesting an ES-DRS and operations of a terminal related to receiving the signal. Thus, efficient transmission and reception of an ES-DRS may be supported, power consumption of a terminal may be reduced, and energy consumed by a base station to provide a signal necessary for a procedure of obtaining synchronization by a terminal may also be reduced.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

Industrial Applicability

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1.   A method for operating a terminal in a wireless communication system, the method comprising:

receiving at least one synchronization signal and broadcast channel block (SSB);
obtaining synchronization with a base station by using a synchronization signal included in the SSB;
obtaining system information based on a master information block (MIB) included in the SSB;
performing a random access procedure based on the system information;
transmitting a message for requesting transmission of an SSB-based discovery signal to the base station; and

performing tracking for at least one of time and frequency based on the discovery signal.

2. The method of claim 1, wherein the at least one SSB is received in a primary cell provided by the base station, and wherein the discovery signal is received in a secondary cell provided by the base station.

3. The method of claim 1, wherein the discovery signal has a structure including at least one multiplexed synchronization signal, at least one broadcast channel and at least one reference signal or has a structure including at least one of a plurality of synchronization signals, at least one reference signal, at least one cyclic prefix, and at least one guard period (GP).

4. The method of claim 1, further comprising receiving information on an uplink resource for transmitting the message.

5. The method of claim 4, wherein the uplink resource includes at least one of a random access channel (RACH) occasion (RO), a RACH preamble index, a scheduling request (SR) resource, a physical uplink shared channel (PUSCH) resource, or a physical uplink control channel (PUCCH) resource.

6. The method of claim 1, wherein the message includes a request for at least one of a structure of the discovery signal, an index of the discovery signal, or an index group of the discovery signal.

7. The method of claim 1, wherein the discovery signal is received after a predefined time interval has elapsed since transmission of the message.

8. The method of claim 1, further comprising:

   receiving information on at least one index of a transmitted discovery signal; and
   based on allocation of a downlink resource with an area at least partially overlapping with a resource occupied by the discovery signal determined by the at least one index, performing a rate-matching operation on the at least partially overlapping area.

9. The method of claim 1, further comprising:

   receiving information on at least one index of a transmitted discovery signal; and
   determining to exclude uplink transmission from a resource occupied by the discovery signal determined by the at least one index.

10. The method of claim 1, further comprising:

    receiving information indicating addition of an index of a transmitted discovery signal; and
    determining mapping between discovery signals and RACH occasions (ROs) or physical uplink shared channel occasions (POs) such that a RO or PO corresponding to the index is placed after at least one RO or PO corresponding to at least one index of at least one discovery signal that is currently being transmitted.

11. The method of claim 1, wherein the discovery signal indicates a configuration related to at least one of layer 1 (L1) measurement, layer 3 (L3) measurement, channel state information (CSI) measurement, beam failure detection (BFD), candidate beam detection (CBD), a quasi-co located (QCL) source reference signal of a TCI state, a reference signal interworking with configuration of SpatialRelationInfo for an uplink signal, ES-DRS index configuration instead of a CSI-RS for fast SCell activation, and reception of an ES-DRS instead of a TRS in an idle or inactive terminal, by using at least one of a mapping location, an index, a sequence value and a structure.

12. A method for operating a base station in a wireless communication system, the method comprising:

    transmitting at least one synchronization signal and broadcast channel block (SSB);
    transmitting system information related to a random access channel;
    performing a random access procedure based on the system information;
    receiving a message for requesting the base station to transmit an SSB-based discovery signal; and
    transmitting the discovery signal.

13. The method of claim 12, further comprising transmitting information on an uplink resource for transmitting the message.

14. The method of claim 12, further comprising transmitting configuration information including at least one of a structure and an index of the discovery signal.

15. A terminal in a wireless communication system, the terminal comprising:

a transceiver; and
a processor coupled with the transceiver,
wherein the processor is configured to:

receive at least one synchronization signal and broadcast channel block (SSB),
obtain synchronization with a base station by using a synchronization signal included in the SSB,
obtain system information based on a master information block (MIB) included in the SSB,
perform a random access procedure based on the system information,
transmit a message for requesting transmission of an SSB-based discovery signal to the base station, and
perform tracking for at least one of time and frequency based on the discovery signal.

16. A base station in a wireless communication system, the base station comprising:

a transceiver; and
a processor coupled with the transceiver,
wherein the processor is configured to:

transmit at least one synchronization signal and broadcast channel block (SSB),
transmit system information related to a random access channel,
perform a random access procedure based on the system information,
receive a message for requesting the base station to transmit an SSB-based discovery signal, and
transmit the discovery signal.

17. A communication device comprising:

at least one processor; and
at least one computer memory coupled with the at least one processor and storing an instruction that instructs operations when executed by the at least one processor,
wherein the operations comprise:

receiving at least one synchronization signal and broadcast channel block (SSB);
obtaining synchronization with a base station by using a synchronization signal included in the SSB;
obtaining system information based on a master information block (MIB) included in the SSB;
performing a random access procedure based on the system information;
transmitting a message for requesting transmission of an SSB-based discovery signal to the base station; and
performing tracking for at least one of time and frequency based on the discovery signal.

18. A non-transitory computer-readable medium storing at least one instruction, the non-transitory computer-readable medium comprising the at least one instruction that is executable by a processor,
wherein the at least one instruction controls a device to:

receive at least one synchronization signal and broadcast channel block (SSB),
obtain synchronization with a base station by using a synchronization signal included in the SSB,
obtain system information based on a master information block (MIB) included in the SSB,
perform a random access procedure based on the system information,
transmit a message for requesting transmission of an SSB-based discovery signal to the base station, and
perform tracking for at least one of time and frequency based on the discovery signal.

**FIG. 1**

FIG. 2

**FIG. 3**

One Subframe

$14 \cdot 2^{\mu}$ OEDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$     $l = 14 \cdot 2^{\mu} - 1$

**FIG. 4**

**FIG. 5**

**FIG. 6**

EP 4 593 469 A1

INITIAL CELL SEARCH

SYSTEM INFORMATION RECEPTION

RANDOM ACCESS PROCEDURE

GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S701    S702    S703    S704    S705    S706    S707    S708

· DL/UL ACK/NACK
· UE CQI/PMI RI REPORT USING PUSCH AND PUCCH

**FIG. 7**

**FIG. 8**

SSB periodicity(default:20ms)

5ms window

SSB#1　SSB#2　• • •　SSB#L

SSB busrt set

## FIG. 9

EP 4 593 469 A1

**DRS transmission window**

| | slot #0 | slot #1 | slot #2 | slot #3 | slot #4 | slot #5 | slot #6 | slot #7 | slot #8 | slot #9 |
|---|---|---|---|---|---|---|---|---|---|---|
| SS/PBCH block candidate position index | 0 1 | 2 3 | 4 5 | 6 7 | 8 9 | 10 11 | 12 13 | 14 15 | 16 17 | 18 19 |
| PBCH DMRS sequence index | 0 1 | 2 3 | 4 5 | 6 7 | 0 1 | 2 3 | 4 5 | 6 7 | 0 1 | 2 3 |
| PBCH payload indication | 0 0 | 0 0 | 0 0 | 0 0 | 1 1 | 1 1 | 1 1 | 1 1 | 2 2 | 2 2 |
| SS/PBCH block index (Q-4) | #0 | #2 | #0 | #2 | #0 | #2 | #0 | #2 | #0 | #2 |

**FIG. 10**

SFN

SSB time index

| s9, s8, s7, s6, s5, s4, s3, s2, s1, s0 | c0 | b5, b4, b3 | b2, b1, b0 |
|---|---|---|---|

Half frame boundary

◄─────────────── PBCH payload ───────────────►◄─── DMRS ───►

## FIG. 11

Bitmap in Group
(8bits)

| SSB#0 | SSB#1 | SSB#2 | SSB#3 | SSB#4 | SSB#5 | SSB#6 | SSB#7 |
|---|---|---|---|---|---|---|---|

Group-Bitmap
(8bits)

| Group#0 | Group#1 | Group#2 | Group#3 | Group#4 | Group#5 | Group#6 | Group#7 |
|---|---|---|---|---|---|---|---|

## FIG. 12

TERMINAL(1310)　　　　　　　　　　　　　　　　BASE STATION(1320)

S1301

NZP CSI-RS resource set IE (trs-Info)

PERFORM TIME AND/OR
FREQUENCY TRACKING — S1301

**FIG. 13**

1410

F1

250 m

Marco cell

1420

F2

50 m

Small cell

**FIG. 14**

**FIG. 15**

**FIG. 16**

**FIG. 17**

PSS/SSS sequence

8 subcarriers

9 subcarriers

frequency

0  1    6  7  8  9  10    · · ·    133  135    142
                                  132  134  136    143

**FIG. 18**

**FIG. 19**

**FIG. 20**

START

S2101

RECEIVE SSB

S2103

OBTAIN SYNCHRONIZATION BY
USING SYNCHRONIZATION SIGNAL

S2105

PERFORM RANDOM ACCESS PROCEDURE

S2107

TRANSMIT MESSAGE FOR REQUESTING
SSB-BASED DISCOVERY SIGNAL

S2109

PERFORM TIME AND FREQUENCY TRACKING
BY USING SSB-BASED DISCOVERY SIGNAL

END

**FIG. 21**

**FIG. 22**

BASE STATION
(2320)

TERMINAL
(2310)

ALLOCATION INFORMATION FOR
UL SIGNAL/CHANNEL FOR
REQUESTING ES-DRS(S2301)

UL SIGNAL/CHANNEL IN
RESOURCE ALLOCATED FOR
REQUESTING ES-DRS(S2303)

S2305 —| RECEIVE ES-DRS AND
OBTAIN TIME/FREQUENCY
AXIS SYNCHRONIZATION

**FIG. 23**

## INTERNATIONAL SEARCH REPORT

| International application No. |
|---|
| **PCT/KR2023/013177** |

### A. CLASSIFICATION OF SUBJECT MATTER

**H04W 48/16**(2009.01)i; **H04W 48/08**(2009.01)i; **H04W 56/00**(2009.01)i; **H04L 5/00**(2006.01)i

According to International Patent Classification (IPC) or to both national classification and IPC

### B. FIELDS SEARCHED

Minimum documentation searched (classification system followed by classification symbols)

H04W 48/16(2009.01); H04B 7/06(2006.01); H04L 5/00(2006.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SSB(synchronization signal and broadcast channel block), 디스커버리 신호 (discovery signal), 트래킹(tracking), ES-DRS(energy saving-discovery reference signal), 레이트-매칭(rate-matching), 맵핑 (mapping), 중첩(overlap), 인덱스(index)

### C. DOCUMENTS CONSIDERED TO BE RELEVANT

| Category* | Citation of document, with indication, where appropriate, of the relevant passages | Relevant to claim No. |
|---|---|---|
| Y | US 2022-0131676 A1 (APPLE INC.) 28 April 2022 (2022-04-28)<br>See paragraphs [0031], [0035], [0157] and [0903]; and claims 1, 6-7, 12-14 and 16. | 1-7,11-18 |
| A | | 8-10 |
| Y | INTEL CORPORATION. Remaining Details on TRS. R1-1717376, 3GPP TSG RAN WG1 Meeting 90bis. Prague, CZ. 03 October 2017.<br>See section 2.1. | 1-7,11-18 |
| A | NOKIA et al. Potential TRS/CSI-RS occasion(s). R2-2201497, 3GPP TSG-RAN2 Meeting #116-bis-e. [Online]. 11 January 2022.<br>See section 2. | 1-18 |
| A | US 2021-0218529 A1 (QUALCOMM INCORPORATED) 15 July 2021 (2021-07-15)<br>See paragraphs [0054]-[0090]; and figures 3-6. | 1-18 |

☑ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **30 November 2023** | **30 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2023/013177** |

### C.     DOCUMENTS CONSIDERED TO BE RELEVANT

| Category* | Citation of document, with indication, where appropriate, of the relevant passages | Relevant to claim No. |
|---|---|---|
| A | KR 10-2019-0010507 A (LG ELECTRONICS INC.) 30 January 2019 (2019-01-30) See paragraphs [0701]-[0734]. | 1-18 |

Form PCT/ISA/210 (second sheet) (July 2022)

**INTERNATIONAL SEARCH REPORT**
Information on patent family members

International application No.

**PCT/KR2023/013177**

| Patent document cited in search report | | | Publication date (day/month/year) | Patent family member(s) | | | Publication date (day/month/year) |
|---|---|---|---|---|---|---|---|
| US | 2022-0131676 | A1 | 28 April 2022 | CN | 113412600 | A | 17 September 2021 |
| | | | | WO | 2020-168186 | A1 | 20 August 2020 |
| US | 2021-0218529 | A1 | 15 July 2021 | CN | 114902788 | A | 12 August 2022 |
| | | | | EP | 4088540 | A1 | 16 November 2022 |
| | | | | US | 11728944 | B2 | 15 August 2023 |
| | | | | WO | 2021-142494 | A1 | 15 July 2021 |
| KR | 10-2019-0010507 | A | 30 January 2019 | CN | 110959268 | A | 03 April 2020 |
| | | | | CN | 110959268 | B | 03 May 2022 |
| | | | | EP | 3462664 | A1 | 03 April 2019 |
| | | | | EP | 3462664 | B1 | 02 March 2022 |
| | | | | JP | 2020-519214 | A | 25 June 2020 |
| | | | | JP | 2022-116204 | A | 09 August 2022 |
| | | | | JP | 7139413 | B2 | 20 September 2022 |
| | | | | KR | 10-2019-0035633 | A | 03 April 2019 |
| | | | | KR | 10-2341473 | B1 | 20 December 2021 |
| | | | | US | 11101863 | B2 | 24 August 2021 |
| | | | | US | 11128360 | B2 | 21 September 2021 |
| | | | | US | 11128361 | B2 | 21 September 2021 |
| | | | | US | 11133853 | B2 | 28 September 2021 |
| | | | | US | 2019-0058517 | A1 | 21 February 2019 |
| | | | | US | 2020-0127722 | A1 | 23 April 2020 |
| | | | | US | 2020-0127723 | A1 | 23 April 2020 |
| | | | | US | 2020-0127724 | A1 | 23 April 2020 |
| | | | | WO | 2019-017751 | A1 | 24 January 2019 |

Form PCT/ISA/210 (patent family annex) (July 2022)